# EUROPEAN PATENT APPLICATION

(11) **EP 1 715 707 A1**
(43) Date of publication of application: **25.10.2006**
(21) Application number: 04709745.6
(22) Date of filing: 10.02.2004
(51) Int. Cl.: H04Q 7/38

(54) **MOBILE STATION, BASE STATION, COMMUNICATION SYSTEM, AND COMMUNICATION METHOD**

(71) Applicant: MITSUBISHI DENKI KABUSHIKI KAISHA, Chiyoda-ku Tokyo 100-8310 (JP)
(72) Inventor: NIWANO, Kazuhito, c/o MITSUBISHI DENKI K. K., Tokyo 100-8310 (JP)
(74) Representative: Popp, Eugen
(86) International application number: PCT/JP2004/001406
(87) International publication number: WO 2005/076655

(57) **Abstract**

In a communications system, a mobile station sends a transmission request for permission to transmit packet data to a base station and transmits the packet data to the base station according to transmission schedule information about a transmission schedule which the base station determines in response to the transmission request, and the base station transmits a result of judgment of reception of packet data which it has received to the mobile station. The mobile station transmits transmission request information about new packet data which it will transmit to the base station next before completing reception of a result of judgment of reception of packet data which the mobile station has transmitted to the base station from the base station. As a result, since the mobile station can notify a transmission request for permission to transmit next packet data to the base station efficiently, a delay time which occurs due to retransmission of packet data can be shortened.

## Description

### Field of the Invention

The present invention relates to a mobile station and a base station which communicate packet data to each other in a CDMA (Code Division Multiple Access) mobile communications system, the communications system, and a communications method.

### Background of the Invention

As a high-speed mobile communications method which adopts a CDMA system, telecommunications standards called a third generation is adopted by the International Telecommunications Union (ITU) as IMT-2000. A W-CDMA (FDD: Frequency Division Duplex) commercial service was started in Japan in 2001. A W-CDMA (FDD) method is a third-generation mobile communications method, and aims at acquiring a maximum transmission speed of about 2Mbps per mobile station. For the W-CDMA (FDD) method, the first specification is determined by the release 1999th edition summarized in 1999 by the standardization organization 3GPP (3rd. Generation Partnership Project).

Various written standards are disclosed in the Internet <URL:http://www.3gpp.org/ftp/Specs/archive/>.

Based on the above-mentioned specification, an on-demand channel assignment method aimed to improve the performance of the uplink and to expand the functions of the uplink is proposed by the following reference: "AH64: Reducing control channel overhead for Enhanced Uplink", [online], January, 7th-11th, 2003, 3GPPRAN1#30, [searched on May 15, 2003], The Internet <URL:http://www.3gpp.org/ftp/tsg_ran/WG1_RL1/TSGR1_30/Docs/Zips/R1-030067.zip>.

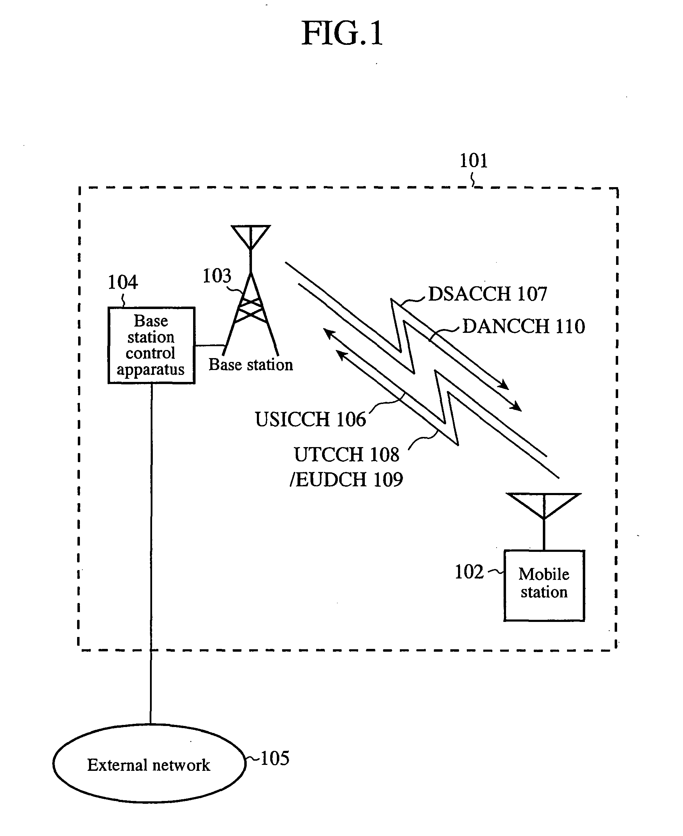

Fig.1 of the above-mentioned reference shows a technique for making a mobile station (UE: User Equipment) having packets to be transmitted transmit a request for permission to transmit the packet data to a base station (Node-B) using a channel for transmission request (i.e., USICCH: Uplink Scheduling Information Control Channel), making the base station notify a scheduling result, such as assignment of a transmission timing, to the mobile station using a downlink channel for assignment (i.e., DSACCH: Downlink Scheduling Assignment Control Channel) in response to the request, and making the mobile station send the packet data on a channel for data transmission (i.e. , EUDCH: Enhanced Uplink Dedicated Transport Channel) and transmit them to the base station according to the notified scheduling result.

In addition, information about the modulating method at the time of transmission of packet data etc. are independently sent on a type-of-modulation information channel (UTCCH: Uplink TFRI Control Cannel) and transmitted to the base station. Information about a result of judgment of reception of the packet data (what is called ACK/NACK) obtained by the base station is notified to the mobile station using a channel for notification (i.e., DANCCH: Downlink Ack/Nack Control Channel).

It can be assumed that those channels mentioned above are an extension of channels used in conventional specifications, or new channels are introduced as the channels. However, the above-mentioned reference does not propose the details of the channels.

A problem with the transmission method disclosed in the above-mentioned reference is that since it takes as much as 10ms·4 = 40ms to carry out a sequence of transmission processes: (transmission request -> assignment -> data transmission -> notification of judgment of reception), when the transmission data are not correctly received by the base station, that is, when judgment of so-called NACK is continued and retransmission of packet data is carried out a large number of times, the transmission delay time becomes large and this results in degradation in the communication quality of audio data and video information having severe requirements on delay.

The present invention is made in order to solve the above-mentioned problem, and it is therefore an object of the present invention to provide a technique for reducing a transmission delay time which occurs in retransmission of data between a mobile station and a base station.

### Disclosure of the Invention

In accordance with the present invention, there is provided a mobile station which sends a transmission request for permission to transmit packet data to a base station and transmits the packet data to the base station according to transmission schedule information about a transmission schedule which the base station determines in response to the transmission request, the mobile station including: a transmitting unit for transmitting the transmission request for permission to transmit packet data to the base station, and for transmitting the packet data to the base station; a receiving unit for receiving the transmission schedule information from the base station, and for receiving a result of judgment of reception of the packet data which is transmitted to the base station by the transmitting unit; and a control unit for controlling the transmitting unit so that the transmitting unit transmits a transmission request for permission to transmit new packet data before the receiving unit completes the reception of the reception judgment result.

As a result, since the mobile station can notify a transmission request for permission to transmit next packet data to the base station efficiently, a delay time which occurs due to retransmission of packet data can be shortened.

In accordance with the present invention, there is provided a base station which receives a transmission request for permission to transmit packet data from a mobile station, notifies transmission schedule information which the base station determines in response to the transmission request to the mobile station, and receives the packet data which is transmitted thereto by the mobile station according to the transmission schedule information, the base station including: a receiving unit for receiving the transmission request from the mobile station, and for receiving packet data which corresponds to the transmission request and which is transmitted by the mobile station; a scheduling unit, responsive to a transmission request for permission to transmit new packet data which the receiving unit receives, for, when a result of judgment of reception of the packet data which is transmitted according to the transmission schedule information shows a failure of reception, assigning a transmission schedule to retransmission of the packet data which the receiving unit has failed to receive on a priority basis, and for creating information about the assigned transmission schedule; and a transmitting unit for transmitting both the transmission schedule information created by the scheduling unit and the result of judgment of reception of the packet data to the mobile station.

As a result, since the mobile station can notify a transmission request for permission to transmit next packet data to the base station efficiently, a delay time which occurs due to retransmission of packet data can be shortened.

In accordance with the present invention, there is provided a communication system in which a mobile station sends a transmission request for permission to transmit packet data to a base station and transmits the packet data to the base station according to transmission schedule information about a transmission schedule which the base station determines in response to the transmission request, and the base station transmits a result of judgment of reception of packet data which it has received to the mobile station, in which the mobile station transmits transmission request information about new packet data which it will transmit to the base station next before completing reception of a result of judgment of reception of packet data which the mobile station has transmitted to the base station from the base station.

As a result, since the mobile station can notify a transmission request for permission to transmit next packet data to the base station efficiently, a delay time which occurs due to retransmission of packet data can be shortened.

### Brief Description of the Figures

Fig. 1 is a schematic diagram showing the structure of a communications system in accordance with embodiment 1 of the present invention;
Fig. 2 is a block diagram showing the structure of a mobile station in accordance with embodiment 1 of the present invention;
Fig. 3 is a block diagram showing the structure of a base station in accordance with embodiment 1 of the present invention;
Fig. 4 is a sequence diagram showing a procedure for transmitting and receiving data between the mobile station and the base station;
Fig. 5 is a flow chart of a process of transmitting and receiving data of the mobile station and base station in accordance with embodiment 1 of the present invention;
Fig. 6 is a timing chart of the process of transmitting and receiving data of the mobile station and base station in accordance with embodiment 1 of the present invention;
Fig. 7 is a timing chart of the process of transmitting and receiving data of the mobile station and base station in accordance with embodiment 1 of the present invention;
Fig. 8 is a block diagram showing the structure of a mobile station in accordance with embodiment 2 of the present invention;
Fig. 9 is a block diagram showing the structure of a base station in accordance with embodiment 2 of the present invention;
Fig. 10 is a flow chart of a process of transmitting and receiving data of the mobile station and base station in accordance with embodiment 2 of the present invention;
Fig. 11 is a timing chart of the process of transmitting and receiving data of the mobile station and base station in accordance with embodiment 2 of the present invention;
Fig. 12 is a block diagram showing the structure of a transmission data buffer of a mobile station in accordance with embodiment 3 of the present invention;
Fig. 13 is a timing chart of a process of transmitting and receiving data of the mobile station and a base station in accordance with embodiment 3 of the present invention;
Fig. 14 is a flow chart of the process of transmitting and receiving data of the mobile station and base station in accordance with embodiment 3 of the present invention;
Fig. 15 is a timing chart of a process of transmitting and receiving data of a mobile station and a base station in accordance with a first variant of embodiment 3 of the present invention;
Fig. 16 is a diagram showing a channel multiplexing method in accordance with the first variant of embodiment 3 of the present invention;
Fig. 17 is a timing chart of a process of transmitting and receiving data of a mobile station and a base station in accordance with a second variant of embodiment 3 of the present invention;
Fig. 18 is a diagram showing a channel multiplexing method in accordance with the second variant of embodiment 3 of the present invention;
Fig. 19 is a timing chart of a process of transmitting and receiving data of a mobile station and a base station in accordance with a third variant of embodiment 3 of the present invention;
Fig. 20 is a diagram showing a channel multiplexing method in accordance with the third variant of embodiment 3 of the present invention; and
Fig. 21 is a timing chart of a process of transmitting and receiving data of a mobile station and a base station in accordance with a fourth variant of embodiment 3 of the present invention.

### Preferred Embodiments of the Invention

In order to explain the invention in greater detail, the preferred embodiments of the invention will be explained below with reference to the accompanying figures.

### Embodiment 1.

Fig. 1 is a schematic diagram showing the structure of a communications system 101 in accordance with embodiment 1 of the present invention.

As shown in the figure, the communications system 101 is provided with a mobile station 102, a base station 103, and a base station control apparatus 104. The base station 103 can communicate with a plurality of mobile stations 102 staying in a fixed area. This area in which the base station 103 can communicate with a plurality of mobile stations is called a sector or cell. For simplicity's sake, only one mobile station 102 is shown in the figure.

The base station control apparatus 104 is connected to an external network 105, such as a public telephone network and the Internet, and relays packet communications between the base station 103 and the external network 105.

Data communications between the mobile station 102 and the base station 103 are carried out using a plurality of channels. As shown in this figure, uplink communication channels used for transmission from the mobile station 102 to the base station 103 include a USICCH 106 (Uplink Scheduling Information Control Channel: channel for transmission request), a UTCCH 108 (Uplink TFRI Control Channel: type-of-modulation information channel), and a EUDCH 109 (Enhanced Uplink Dedicated Transport Channel: channel for data transmission). Downlink communication channels used for transmission from the base station 103 to the mobile station 102 include a DSACCH 107 (Downlink Scheduling Assignment Control Channel: channel for assignment), and a DANCCH 110 (Downlink Ack/Nack Control Channel: channel for notification).

These channels are not used in conventional specifications, and, when they are set up newly, their formats are specified additionally in a new release of the written standards TS25.211 while the compatibility (Backward Compatibility) with the conventional specifications is maintained.

In W-CDMA, the mobile station 102 is called UE (User Equipment), the base station 103 is called Node-B, and the base station control apparatus 104 is called RNC (Radio Network Controller).

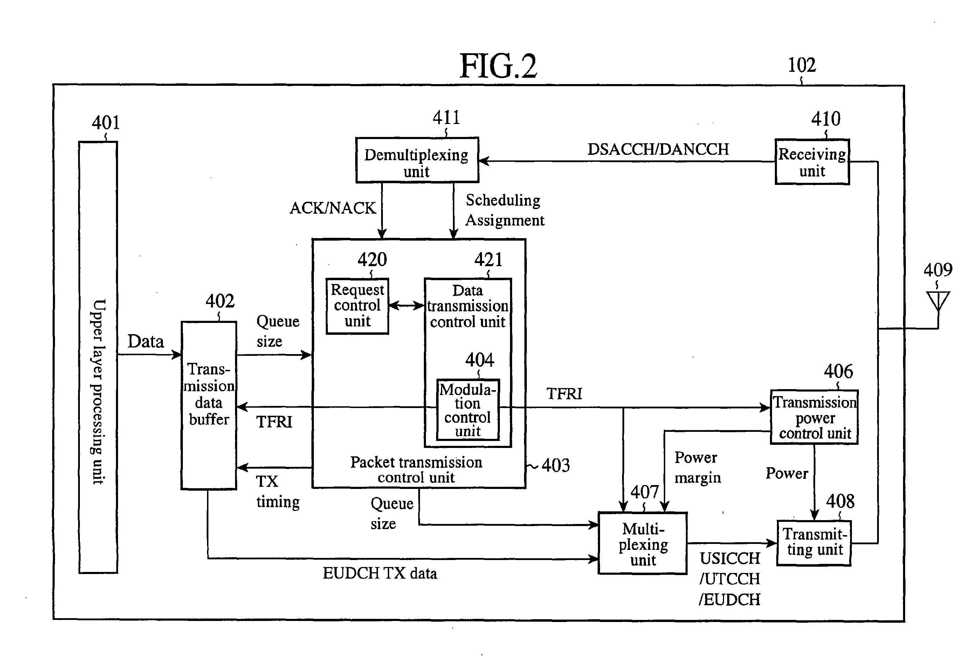

Fig. 2 is a block diagram showing the structure of the mobile station 102 in accordance with embodiment 1 of the present invention.

As shown in this figure, the mobile station 102 is provided with an upper layer processing unit 401 (Upper Layer), a transmission data buffer (transmission-data storage unit) 402 (TX buffer), a packet transmission control unit (control unit) 403 (Packet TX Control), a transmission power control unit 406 (Power Control), a multiplexing unit 407 (MUX), a transmitting unit 408 (TX), an antenna 409, a receiving unit 410 (RX), and a demultiplexing unit 411 (DEMUX). The upper layer processing unit 401, transmission data buffer 402, packet transmission control unit 403, transmission power control unit 406, multiplexing unit 407, transmitting unit 408, receiving unit 410, and demultiplexing unit 411 are components which constitute a processor of the mobile station 102, and this processor is divided into those components for the sake of convenience according to program modules which make the processor operate.

The packet transmission control unit 403 is provided with a request control unit 420 and a data transmission control unit 421, and the data transmission control unit 421 includes a modulation control unit 404 (TFRI Control).

The upper layer processing unit 401 processes higher-level protocol layers, such as a TCP/IP layer, using a known technique.

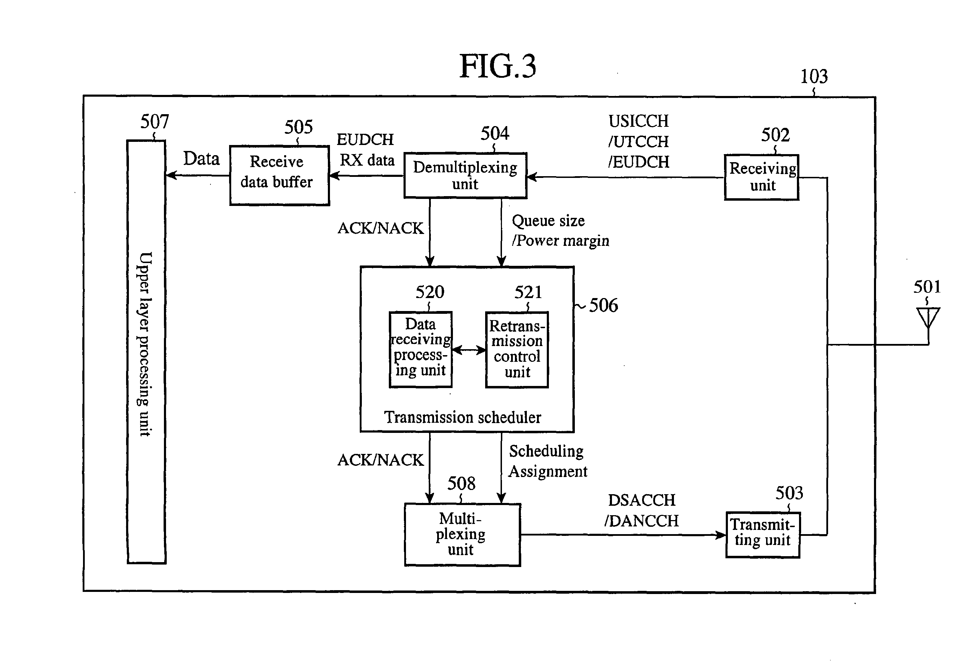

Fig. 3 is a block diagram showing the structure of the base station 103 in accordance with embodiment 1 of the present invention.

As shown in this figure, the base station 103 is provided with an antenna 501, a receiving unit 502 (RX), a transmitting unit 503 (TX), a demultiplexing unit 504 (DEMUX), a receive data buffer 505 (RX buffer), a transmission scheduler (scheduling section) 506 (Scheduler), an upper layer processing unit 507 (Upper layer), and a multiplexing unit 508 (MUX). The receiving unit 502, transmitting unit 503, demultiplexing unit 504, receive data buffer 505, transmission scheduler 506, upper layer processing unit 507, and multiplexing unit 508 are components which constitute a processor of the base station 103, and this processor is divided into those components for the sake of convenience according to program modules which make the processor operate.

The transmission scheduler 506 is provided with a data receiving processing unit 520 and a retransmission control unit 521.

The upper layer processing unit 507 processes higher-level protocol layers, such as a TCP/IP layer, using a known technique.

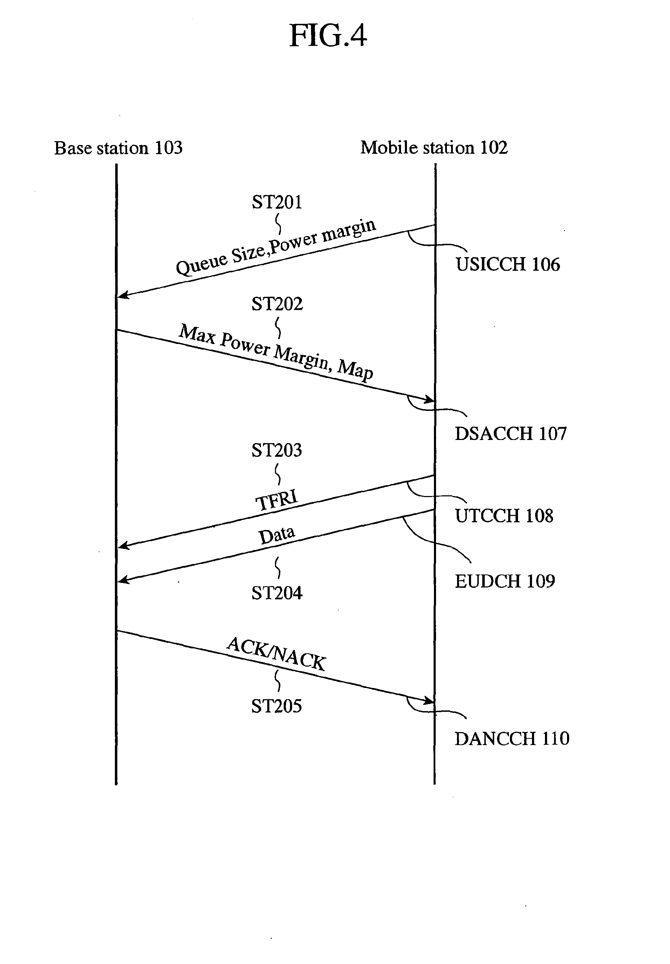

In a variant, a part of the functions of the base station 103 can be disposed in the base station control apparatus 104. Next, the operation of the communications system in accordance with this embodiment of the present invention will be explained. First, the role of each channel used for data transmission and reception between the mobile station 102 and the base station 103, and flows of transmission and reception procedures will be explained with reference to Fig. 4.

When packet data which is to be transmitted to the base station 103 is generated in the mobile station 102, the mobile station 102 transmits the transmission data size (Queue Size) of the packet data and transmission power margin information (Power Margin) indicating a margin for the maximum transmission power of the mobile station 102 to the base station 103 using the USICCH 106 (in step ST201).

When receiving the transmission data via the USICCH 106, the base station 103 extracts the transmission data size (Queue Size) and transmission power margin information (Power Margin) from the received transmission data, and determines a schedule, such as a transmit-receive timing at which packet data between the base station 103 itself and each mobile station 102 is transmitted and received, based on those pieces of mobile station information and mobile station information about other mobile stations 102 staying in the cell thereof. The base station 103 then notifies the determined transmit-receive timing information (Map) and an amount of maximum-permissible-power increase or decrease (Max Power Margin) which is assigned to each mobile station 102 to each mobile station 102 using the DSACCH 107 (in step ST202).

When receiving the transmission data via the DSACCH 107, the mobile station 102 transmits type-of-modulation information (TFRI) (Transport Format Resource Indicator) at the current time in the mobile station 102 etc. to the base station 103 using the UTCCH 108 (in step ST203).

The mobile station 102 also transmits the packet data (Data) which the mobile station itself modulates according to its modulation method to the base station 103 using the EUDCH 109 based on the information about the amount of maximum-permissible-power increase or decrease (Max Power Margin) and the transmission timing information (Map), which are contained in the transmission data transmitted thereto via the DSACCH 107 (in step ST204).

The base station 103 demodulates the packet data (Data) contained in the transmission data transmitted thereto via the EUDCH 109 according to the type-of-modulation information (TFRI) contained in the transmission data transmitted thereto via the UTCCH 108 so as to determine whether or not the packet data has been received correctly.

When determining that the packet data has been received correctly, the base station 103 notifies ACK to the mobile station 102 using the DANCCH 110, whereas when determining that the received packet data is an erroneous data, the base station 103 notifies NACK to the mobile station 102 using the DANCCH 110 (in step ST205).

When receiving ACK from the base station 103, the mobile station 102 repeats the communications processing of steps ST201 to ST205 for the next packet data transmission.

On the other hand, when receiving NACK from the base station 103, the mobile station 102 repeats the communications processing of steps ST201 to ST205 in order to transmit the same packet data to the base station 103 again.

Next, the details of the packet data transmission-and-reception processing of the mobile station 102 and base station 103 will be explained.

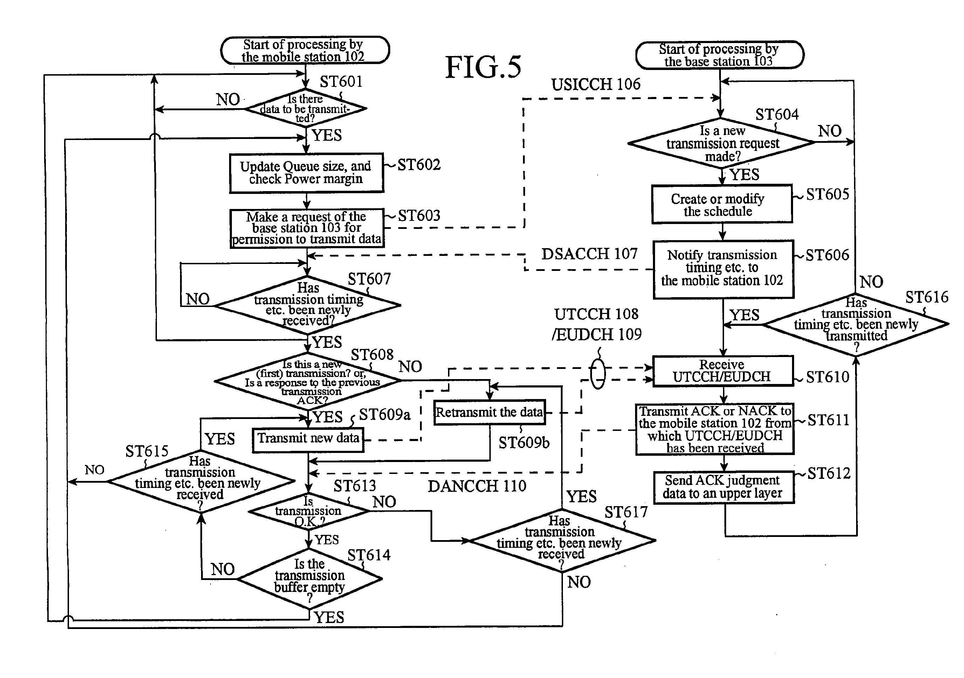

Fig. 5 is a flow chart of the packet data transmission-and-reception processing of the mobile station 102 and base station 103 in accordance with embodiment 1 of the present invention.

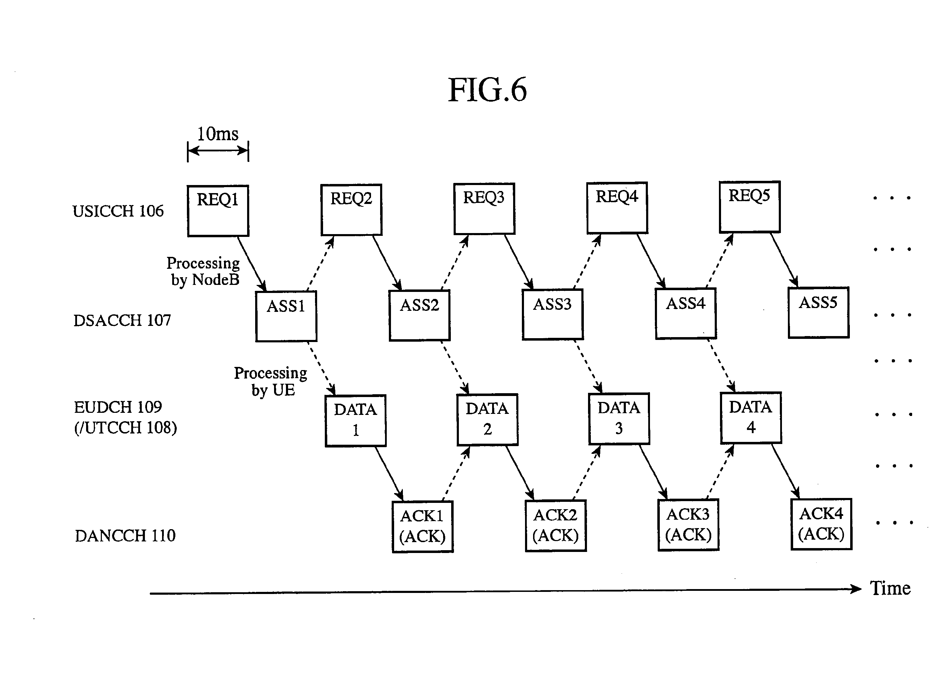

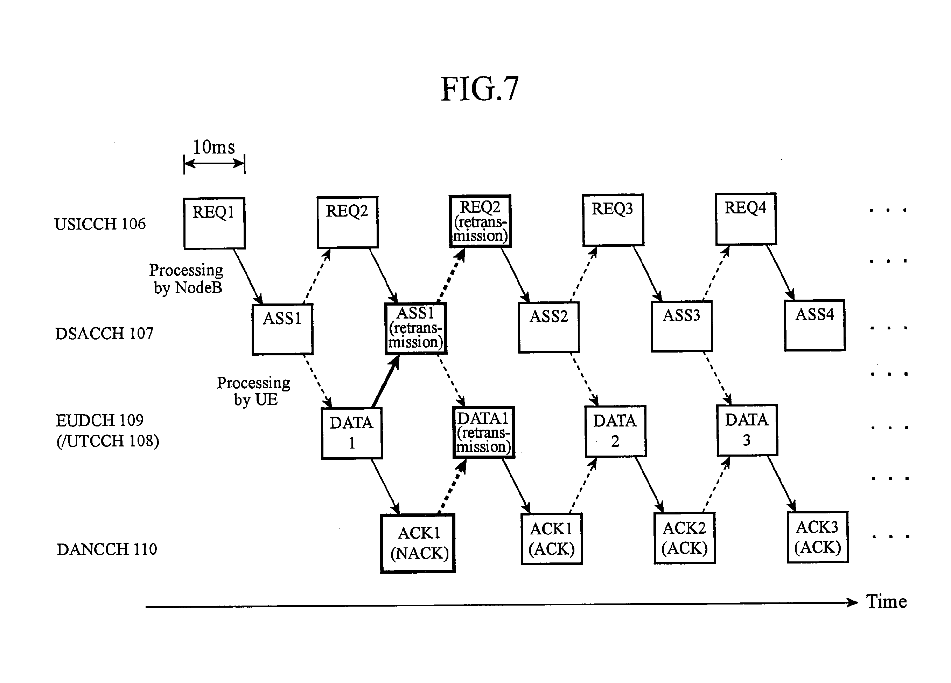

Figs. 6 and 7 are timing charts of the packet data transmission-and-reception processing of the mobile station 102 and base station 103. Fig. 6 shows a case where packet data transmitted from the mobile station 102 are all received correctly by the base station 103, and Fig. 7 shows a case where some packet data (i.e., DATA1) transmitted from the mobile station 102 are not received correctly by the base station 103, and NACK is then notified, as a result of judgment of reception of DATA1, to the mobile station 102 by the base station 103. In these figures, the vertical axis shows channels and the horizontal axis shows time. Arrows (solid lines) show processing carried out by the base station 103, and arrows (dashed lines) show processing carried out by the mobile station 102. REQ1 to REQ5 are transmission requests which the mobile station 102 transmits one by one using the USICCH 106, ASS1 to ASS5 are pieces of scheduling assignment information which the base station 103 transmits using the DSACCH 107 in response to the transmission requests REQ1 to REQ5, respectively, DATA1 to DATA4 are packet data which the mobile station 102 transmits to the base station using the EUDCH 109, and ACK1 to ACK4 are results of judgment of reception of DATA1 to DATA4 which the base station 103 transmits to the mobile station using the DANCCH 110, the judgment result of ACK or NACK being shown in each parenthesis. Although the type-of-modulation information which the mobile station 102 transmits to the base station using the UTCCH 108 is not illustrated, it can be transmitted at the same time when DATA1 to DATA4 are transmitted or it can be partially transmitted in advance of DATA1 to DATA4.

Hereafter, a process of transmitting and receiving packet data between the mobile station 102 and the base station 103 will be explained with reference to Figs. 5 to 7, 2 and 3.

First, in the mobile station 102, the transmission data buffer 402 continues monitoring whether packet data to be transmitted to the base station 103 has been furnished thereto from the upper layer processing unit 401 (in step ST601 of Fig. 5).

A process of furnishing packet data from the upper layer processing unit 401 to the transmission data buffer 402 will be explained with reference to Fig. 2. The upper layer processing unit 401 performs a predetermined processing associated with a higher-level protocol layer, and outputs one or more packet data (Data) which are to be transmitted to the base station 103 to the transmission data buffer 402. Assume that the upper layer processing unit 401 carries out processing associated with the TCP/IP layer.

Then the mobile station advances to step ST602 in which the transmission data buffer 402 updates the size (i.e., Queue size) of the packet data which it is holding therein based on the size of the packet data furnished from the upper layer processing unit 401.

The transmission power control unit 406 furnishes the transmission power margin information (i.e., Power margin) to the multiplexing unit 407.

Then, the mobile station advances to step ST603 in which it transmits a transmission request REQ1 for permission to transmit packet data to the base station 103 using the USICCH 106.

The transmission request REQ1 is generated by the multiplexing unit 407. The multiplexing unit 407 multiplexes the information about the size (i.e., Queue size) of the packet data stored in the transmission data buffer 402, which is furnished via the packet transmission control unit 403, and the transmission power margin information (i.e., Power margin) which is furnished from the transmission power control unit 406, and outputs them, as a signal associated with the USICCH 106, to the transmitting unit 408. The transmitting unit 408 converts the signal associated with the USICCH 106, into which the packet data size and transmission power margin information are multiplexed and which is furnished from the multiplexing unit 407, into a radio frequency signal using a known technique. Based on the transmission power control information (i.e., Power) furnished from the transmission power control unit 406, the transmitting unit amplifies the radio frequency signal so that it has transmission power required for transmission using a known technique, and transmits it to the base station 103 via the transmission antenna 409.

The transmission power control unit 406 outputs the transmission power control information (Power) required for transmission of packet data to the base station 103 to the transmitting unit 408 according to the type-of-modulation information (TFRI) furnished from the modulation control unit 404.

The base station 103 monitors whether it has received a transmission request for permission to transmit packet data, via the USICCH 106, from the mobile station 102 (in step ST604) .

When receiving a radio frequency signal associated with the USICCH 106 via the antenna 501, the base station furnishes the received radio frequency signal to the receiving unit 502 thereof, and the receiving unit converts it into a baseband signal. The conversion of the received radio frequency signal into the baseband signal is carried out using a known technique.

The baseband signal is then furnished to the demultiplexing unit 504, and the demultiplexing unit 504 demultiplexes the base band signal into signals associated with channels. The demultiplexing unit 504 extracts the size information (i.e., Queue Size) about the packet data and transmission power margin information (i.e., Power margin) from the signal associated with the USICCH 106, and furnishes them to the transmission scheduler 506.

Then, in step ST605, the base station 103 generates a transmission schedule for the received transmission request REQ1.

The transmission scheduler 506 determines a transmission timing at which each mobile station 102 transmits packet data to the base station 103, and so on based on the size information (i.e., Queue Size) about the transmission data, transmission power margin information (i.e., Power margin), and other mobile station information, which are furnished from the demultiplexing unit 504, and generates scheduling assignment information (i.e., Scheduling assignment). In this case, as an assignment (scheduling) method for assigning the transmission timing and so on, which is used by the transmission scheduler 506, there can be provided various methods including a method of giving priority to a mobile station 102 having a large volume of packet which has not been transmitted yet, a method of giving priority to a mobile station 102 having a transmission power margin, a method of assigning transmission timings to the plurality of mobile stations in the order that the base station has received transmission requests from them, a method of assigning transmission timings to the plurality of mobile stations in a predetermined order (Round-Robin), a method of giving priority to a mobile station 102 having little propagation loss or interference, i.e., having a good environmental communication condition (Max C/I), and a method (e.g., Proportional Fair) intermediate between the Round-Robin method and the Max C/I method. In the design of the base station and the communications system, the assignment method is designed and selected so that the throughput of the whole cell is the highest.

The transmission scheduler 506 furnishes the generated scheduling assignment information (i.e., Scheduling assignment) to the multiplexing unit 508.

The multiplexing unit 508 generates a signal associated with the DSACCH 107 from the scheduling assignment information furnished thereto, and outputs it to transmitting unit 503.

The transmit-receive timing information (Map) and amount of maximum-permissible-power increase or decrease (Max Power Margin) are defined as the scheduling assignment information, as previously mentioned. In addition, assignment or additional assignment of transmission rate related information, such as a maximum transmission rate, a temporary restricted transmission rate, and a minimum guaranteed transmission rate, or power related information, such as a maximum permission transmission power and a short-time duration transmission power, can be made. As an alternative, a fixed relation can be established between the above-mentioned variety of pieces of information, and specification of specific piece of information can be indirectly made. For example, since the transmission rate has a proportional relationship with the transmission power, instead of specifying the transmission rate directly and notifying it to the mobile station 102, it is possible to notify corresponding transmission power to the mobile station 102.

Next, in step ST606, the generated scheduling assignment information ASS1 is notified to the mobile station 102 via the antenna 501.

The mobile station 102, in step ST607, monitors whether it has received ASS1 using the DSACCH 107.

When receiving a radio frequency signal associated with the DSACCH 107 from the base station 103 via the antenna 409, the mobile station furnishes the radio frequency signal to the receiving unit 410. The receiving unit 410 converts the radio frequency signal furnished thereto into a baseband signal using a known technique, and then furnishes it to the demultiplexing unit 411. The demultiplexing unit 411 demultiplexes the furnished baseband signal into signals associated with channels using a known technique. The demultiplexing unit 411 extracts the scheduling assignment information (i.e., Scheduling assignment) from the demultiplexed signal associated with the DSACCH 107, and furnishes the scheduling assignment information to the packet transmission control unit 403.

The packet transmission control unit 403 extracts the data transmission timing (i.e., TX timing) from the furnished scheduling assignment information (i.e., Scheduling Assignment), and furnishes the data transmission timing to the transmission buffer 402.

Simultaneously, the mobile station 102 shifts to the process, in step ST601, of checking to see whether yet-to-be-transmitted data exist therein and, when yet-to-be-transmitted data exist therein, transmitting the next transmission request REQ2 to the base station 103. The base station 103 receives the next transmission request REQ2 in step ST604, generates scheduling assignment information ASS2 corresponding to the transmission request REQ2 in step ST605, and transmits the scheduling assignment information ASS2 to the mobile station 102 in step ST606.

The request control unit 420 manages a sequence of processes of handling transmission requests REQn (n= 1, 2, 3, 4, ...) and plural pieces of scheduling assignment information ASSn which are respectively transmitted from the base station 103 in response to the requests REQn, that is, a sequence of transmission of REQ1 (in step ST603) -> reception of ASS1 (in step ST607) -> transmission of REQ2 (in step ST603) -> reception of ASS2 (in step ST607) ->....

By repeating the above-mentioned sequence of processes, transmission of the transmission requests REQ1 to REQ5 shown in Figs. 6 and 7 and notifications of pieces of scheduling assignment information ASS1 to ASS5 from the base station 103 in response to REQ1 to REQ5 are carried out.

In step ST608, the packet transmission control unit 403 of the mobile station 102 determines whether or not the transmission request REQ1 corresponding to the scheduling assignment information ASS1 which it has received from the base station 103 is for the first-time transmission of data, or whether the result of judgment of the last reception of data at the base station indicates ACK.

When the transmission request REQ1 is for the first-time transmission of data, or when the result of the judgment of the last reception of data at the base station indicates ACK, the packet transmission control unit of the mobile station advances to step ST609a in which it performs first-time packet data transmission processing. Otherwise, the packet transmission control unit advances to step ST609b in which it performs a process of retransmitting the packet data to the base station.

Hereafter, the details of the process of transmitting packet data to the base station 103 using the EUDCH 109 in step ST609a will be explained.

The modulation control unit 404 of the mobile station 102 determines a method of modulating the packet data to be transmitted to the base station 103, and information about the data size (type-of-modulation information: TFRI) based on the transmission data size (i.e., Queue size) of the packet data notified from the transmission data buffer 402, and the scheduling assignment information (Scheduling Assignment) ASS1 furnished from the demultiplexing unit 411. For example, when the transmit-receive timing information (Map) is notified as the scheduling assignment information, the mobile station 102 transmits the packet data at a timing specified by the transmit-receive timing information. When the amount of maximum-permissible-power increase or decrease (Max Power Margin) is notified, the mobile station determines a transmission rate at which it can transmit packet data with the change in the transmission power falling within the amount of maximum-permissible-power increase or decrease based on the signal power vs. noise (Eb/No) required for communication services and a certain modulation method, and then determines the method of modulating the packet data to be transmitted to the base station and information about the data size by calculating the amount of data which can be transmitted at a time. When the maximum transmission rate is notified as the scheduling assignment information, the mobile station determines a transmission rate such that it does not exceed the notified maximum transmission rate, so that as much as possible of the packet data stored in the transmission data buffer 402 can be transmitted to the base station, and then determines the method of modulating the packet data to be transmitted to the base station and information about the data size by calculating the amount of data which can be transmitted at a time. The amount of data which can be transmitted at a time is decided according to a certain format which is predetermined according to, for example, factors, such as transmission rate requirements defined by specifications, the maximum transmission power of the mobile station 102, and propagation environments. Assume that both the mobile station 102 and the base station 103 holds this predetermined format.

The determined TFRI is furnished to the transmission data buffer 402, multiplexing unit 407, and transmission power control unit 406.

The transmission data buffer 402 furnishes packet data (EUDCH TX data) to the multiplexing unit 407 so that the transmission of the packet data from the mobile station 102 to the base station 103 coincides with the data transmission timing (TX timing) furnished from the packet transmission control unit 403. At this time, in order to transmit the packet data as DATA1, the transmission data buffer 402 determines the amount of the packet data (EUDCH TX data) to be furnished to the multiplexing unit 407 based on the modulating method and data size information which are contained in the type-of-modulation information (TFRI), and then furnishes the determined amount of packet data to the multiplexing unit 407.

The multiplexing unit 407 multiplexes at least one or more packet data (EUDCH TX data) based on the type-of-modulation information (TFRI), and generates a signal associated with the EUDCH 109 from the information (EUDCH TX data) about the multiplexed packet data itself. The multiplexing unit 407 also generates a signal associated with the UTCCH 108 from the type-of-modulation information (TFRI), and, after multiplexing these signals, outputs them to the transmitting unit 408.

The transmitting unit 408 converts the signal associated with the UTCCH 108 and signal associated with the EUDCH 109 which are furnished from the multiplexing unit 407 into radio frequency signals using a known technique. The transmitting unit 408 also amplifies the radio frequency signals based on the transmission power control information (Power) furnished from the transmission power control unit 406 so that it has transmission power required for transmission using a known technique, and outputs the amplified radio frequency signals to the antenna 409. The antenna 409 then transmits DATA1 to the base station 103.

The base station 103, in step ST610, receives DATA1 and the type-of-modulation information (TFRI) which are transmitted from the mobile station 102 via the antenna 501. The antenna 501 receives these radio frequency signals, and outputs them to the receiving unit 502. The receiving unit 502 converts each the radio frequency signals associated with the UTCCH 108 and EUDCH 109 into a baseband signal using a known technique, and outputs it to the demultiplexing unit 504.

The demultiplexing unit 504 demultiplexes the baseband signal into signals associated with channels, extracts the type-of-modulation information (TFRI) from the signal associated with the UTCCH 108, and demodulates the signal associated with the EUDCH 109 using this TFRI so as to extract DATA1 from the signal. The demultiplexing unit 504 then determines whether DATA1 has been received correctly. When determining that DATA1 has been received correctly, the demultiplexing unit 504 outputs ACK, as the result of the judgment of the reception of DATA1, to the multiplexing unit 508 via the transmission scheduler 506, whereas determining that DATA1 has not been received correctly, the demultiplexing unit 504 outputs NACK, as the result of the judgment of the reception of DATA1, to the multiplexing unit 508 via the transmission scheduler 506.

When determining that DATA1 has been received correctly, the demultiplexing unit 504 outputs the received data (EUDCH RX data) DATA1 to the receive data buffer 505. On the other hand, when determining that DATA1 has not been received correctly, the demultiplexing unit 504 discards the received data (EUDCH RX data) DATA1.

Next, in step ST611, the multiplexing unit 508 generates a signal associated with the DANCCH 110 from the result of the judgment of the reception (ACK/NACK) ACK1 notified thereto via the transmission scheduler 506, and outputs it to the transmitting unit 503. In this example, as shown in Fig. 6, it is assumed that DATA1 is received correctly and ACK1 indicates ACK.

The transmitting unit 503 transmits ACK1 to the mobile station 102 via the transmit/receive antenna 501.

Next, in step ST612, the receive data buffer 505 furnishes the packet data DATA1 received correctly to the upper layer processing unit 507.

Next, in step ST616, the transmission scheduler 506 of the base station 103 checks to see whether the next scheduling information has been already transmitted to the mobile station 102, and, when determining that the next scheduling information has been already transmitted to the mobile station, shifts to step ST610 in which it waits for reception of packet data corresponding to the scheduling information. On the other hand, when determining that the next scheduling information has not been transmitted to the mobile station yet, the transmission scheduler shifts to step ST604 in which it waits for a new transmission request from the mobile station 102.

As mentioned above, after the mobile station 102, in step ST607, receives ASS1 from the base station 103, the mobile station shifts to step ST601 in which it performs the process of transmitting the next transmission request REQ2. Therefore, the mobile station 102 transmits the transmission request REQ2 to the base station 103 before receiving the reception judgment result ACK1 for DATA1, which is transmitted in step ST611.

As a result, if the base station 103 has already notified the scheduling assignment information ASS2 for REQ2 to the mobile station 102 when the base station 103 transmits ACK1 to the mobile station 102, the base station can perform the process of receiving DATA2 without a break.

Similarly, since the mobile station 102 transmits the next transmission request REQn+1 to the base station 103 before completing the reception of the reception judgment result ACKn for the transmission data DATAn (n= 1, 2, 3, 4, ...) transmitted from the mobile station 102, the mobile station 102 can carry out the transmission-and-reception processing efficiently even when the amount of transmission data held thereby is large.

The mobile station 102, in step ST613, monitors whether it has received the reception judgment result ACK1 for DATA1 from the base station 103.

When receiving a radio frequency signal associated with the DANCCH 110 from the base station 103 via the antenna 409, the mobile station furnishes the received radio frequency signal to the receiving unit 410, and the receiving unit 410 converts it into a baseband signal. The baseband signal is furnished to the demultiplexing unit 411, and the demultiplexing unit 411 extracts the reception judgment result (ACK/NACK) ACK1 for DATA1, which is contained in the signal associated with the DANCCH 110. Extracted ACK1 is outputted to the packet transmission control unit 403.

The packet transmission control unit 403, in step ST613, determines that DATA1 has been received correctly in the base station 103 when the reception judgment result ACK1 for DATA1 indicates ACK. On the other hand, when ACK1 indicates NACK, the packet transmission control unit 403 determines that DATA1 has not been received correctly in the base station 103.

When determining that DATA1 has been received correctly in the base station 103, the packet transmission control unit 403 shifts to step ST614 in which it checks to see whether packet data to be transmitted remain in the transmission data buffer 402.

On the other hand, when determining that DATA1 has not been received correctly in the base station 103, the packet transmission control unit 403 shifts to step ST617 in which it determines whether the new scheduling assignment information ASS2 has been transmitted to the mobile station from the base station 103.

Hereafter, a case where the reception judgment result ACK1 for DATA1 indicates ACK will be explained as an example. A case where ACK1 indicates NACK will be explained later.

When, in step ST614, determining that packet data to be transmitted remain in the transmission buffer 402, the packet transmission control unit 403 advances to step ST615 in which it further determines whether or not new scheduling assignment information has been notified to the mobile station from the base station 103. When new scheduling information ASS2 has been notified to the mobile station, the packet transmission control unit shifts to step ST609a in which it carries out first-time transmission of the packet data DATA2 in response to the transmission request REQ2. On the other hand, when ASS2 has not been notified to the mobile station yet, the packet transmission control unit shifts to step ST602 in which it retransmits REQ2 to the base station.

When, in step ST614, determining that no packet data to be transmitted remain in the transmission buffer 402, the packet transmission control unit 403 shifts to step ST601 in which it waits for an input of new data from the upper layer processing block 401.

When, in step ST611, determining that DATA1 transmitted from the mobile station 102 has not been received correctly, the base station 103 transmits NACK to the mobile station 102 as the reception judgment result ACK1.

The demultiplexing unit 504 discards DATA1 which the base station has received since the reception judgment result indicates NACK, and does not output DATA1 to the receive data buffer 505.

In this case, the base station 103 can recognize that DATA1 will be retransmitted to from the mobile station 102 when the base station 103 determines whether DATA1 has been received correctly. Therefore, the base station 103 does not perform creation and transmission of scheduling assignment information ASS2 for the second transmission request REQ2 which has been already transmitted thereto from the mobile station 102. Instead, as shown in Fig. 7, the base station 103 creates scheduling assignment information ASS1 for retransmission of DATA1 (retransmission), and transmits it to the mobile station 102 (in step ST606).

The data receiving processing unit 520 manages the reception judgment result ACK for each DATA which the base station has received from the mobile station 102. When it is determined that NACK is generated for received DATA, the data receiving processing unit 520 instructs the retransmission control unit 521 to perform creation and transmission of scheduling assignment information ASS (retransmission) for retransmission of the data. The retransmission control unit 521 manages the process of transmitting the scheduling assignment information ASS for the first-time transmission request REQ and the scheduling assignment information ASS (retransmission) for retransmission.

The data receiving processing unit 520 and retransmission control unit 521 perform such a sequence of transmission-and-reception processes as shown in Figs. 6 and 7 in cooperation with each other as mentioned above.

The mobile station 102, in step ST613, receives the reception judgment result ACK1 for DATA1, and, when the reception judgment result indicates NACK, advances to step ST617.

When, in step ST617, determining that the mobile station 102 has already received the scheduling assignment information ASS1 (retransmission) for retransmission of DATA1 from the base station 103, the mobile station 102 advances to step ST609b. On the other hand, when determining that the mobile station 102 has not received the scheduling assignment information ASS1 (retransmission) yet, the mobile station 102 returns to step ST602 in which it transmits REQ1 to the base station again.

In step ST609b, the packet transmission control unit 403 extracts the retransmission timing (TX timing) for DATA1 from ASS1 (retransmission) furnished thereto via the demultiplexing unit 411, notifies the retransmission timing to the transmission data buffer 402, and makes preparations for retransmission of DATA1 to the base station.

The modulation control unit 404 notifies new type-of-modulation information (TFRI) to the transmission data buffer 402, multiplexing unit 407, and transmission power control unit 406, when changing the modulation method etc. at the time of the retransmission of DATA1 to the base station.

The transmission data buffer 402 furnishes DATA1 (EUDCH TX data) to the multiplexing unit 407 based on the transmission timing (TX timing) notified thereto from the packet transmission control unit 403, and type-of-modulation information (TFRI) which is furnished thereto from the modulation control unit 404 when needed.

The multiplexing unit 407 multiplexes DATA1 (EUDCH TX data) so that this data can be sent out using the EUDCH 109, and furnishes the data to the transmitting unit 408. The transmitting unit 408 retransmits DATA1 to the base station 103 via the antenna 409.

The base station 103, in step ST610, receives the retransmitted data DATA1 (retransmission), and, when the reception judgment result for DATA1 (retransmission) indicates ACK, transmits ACK1 (ACK) to the mobile station 102 as the reception judgment result (in step ST611).

As mentioned above, the request control unit 420 of the mobile station 102 manages the reception of the scheduling assignment information ASSn from the base station 103 which is generated in response to the transmission request REQn. When recognizing that the scheduling assignment information ASS1 (retransmission) for retransmission of DATA1 has been received from the base station 103, the request control unit 420 controls the mobile station to transmit the second-time transmission request REQ2 (retransmission) to the base station 103 again.

Therefore, the base station 103 transmits the scheduling assignment information ASS2 in response to the transmission request REQ2 (retransmission) to the mobile station 102 after transmitting the reception judgment result ACK1 (ACK) for DATA1 (retransmission).

When the mobile station 102, in step ST613, determines that the reception judgment result for DATA1 (retransmission) indicates ACK, and recognizes that it has received the scheduling assignment information ASS2 corresponding to REQ2, the mobile station 102 transmits DATA2 to the base station 103 according to ASS2.

The data transmission control unit 421 of the mobile station 102 manages the sequence of processes of transmitting DATAn (n= 1, 2, 3, 4, ...) and receiving the reception judgment result ACKn for DATAn, that is, transmission of DATA1 -> reception of ACK1 → transmission of DATA2 → reception of ACK2 -> .... The sequence of data transmission-and-reception processes as shown in Figs. 6 and 7 is carried out by notifying the reception results ASS and ACK for each REQ and each DATA transmission to each other between the request control unit 420 and the data transmission control unit 421.

As mentioned above, in accordance with this embodiment 1, the mobile station 102 transmits a request for permission to transmit the next transmission data to the base station 103 before receiving a result of judgment of reception of transmission data sent out from the mobile station 102 from the base station 103. As a result, the present embodiment offers an advantage of being able to shorten the time lapsed until the mobile station transmits the next transmission data to the base station 103. Furthermore, even if the reception judgment result for certain transmission data indicates NACK and the base station 103 desires retransmission of the transmission data, the mobile station can retransmit the data to the base station quickly and therefore the delay time imposed on the transmission of the data can be reduced.

In addition, the intervals at which the transmission request is transmitted can be reduced (for example, 2ms) as compared with related art cases mentioned above. In this case, the amount of information of the transmission request REQ and scheduling assignment information ASS for each transmission of data can be reduced. For this reason, since the whole transmission cycle, as well as the time required for transmission of those pieces of information, can be shortened, the delay time imposed on the first-time transmission of data and the delay time imposed on retransmission of data can be reduced.

### Embodiment 2.

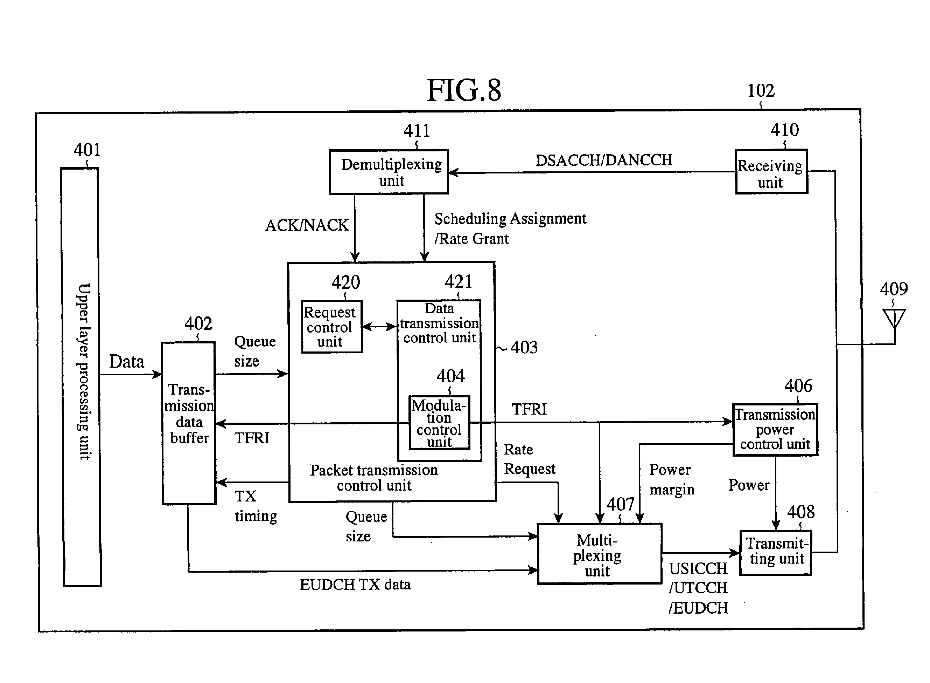

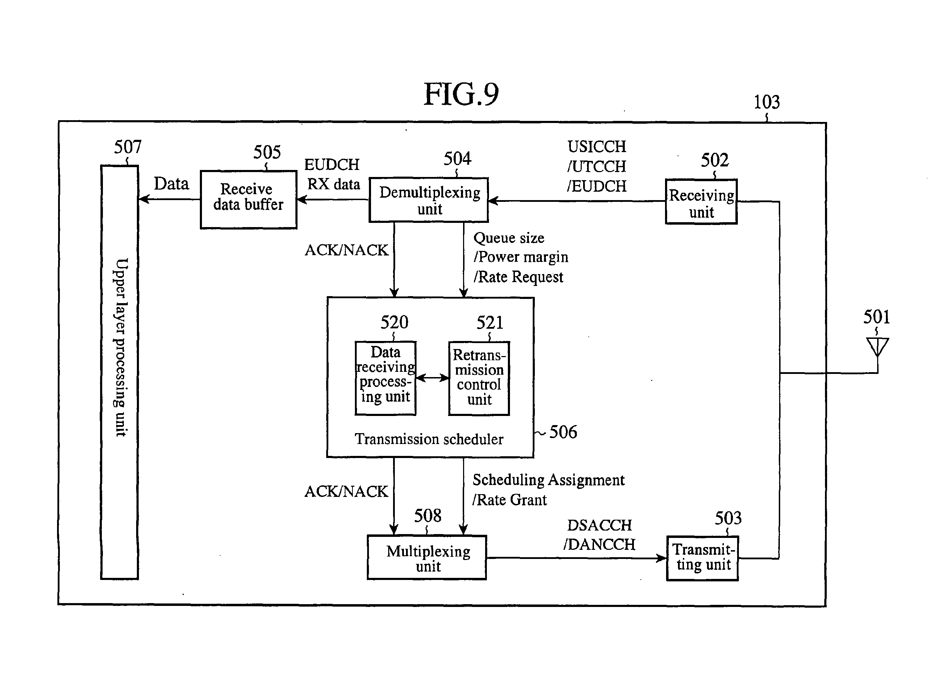

Fig. 8 is a block diagram showing the structure of a mobile station 102 in accordance with embodiment 2 of the present invention. The same numerals as shown in Fig. 2 denote the same components as those of embodiment 1. Fig. 9 is a block diagram showing the structure of a base station 103 in accordance with embodiment 2 of the present invention. The same numerals as shown in Fig. 3 denote the same components as those of embodiment 1.

In accordance with embodiment 2, information which the mobile station 102 transmits to the base station 103 using the USICCH 106 includes a transmission rate change request (Rate Request) RR for transmission in addition to transmission data size (Queue Size) and transmission power margin information (Power Margin) indicating a margin for the maximum transmission power of the mobile station 102, which are the same as those explained in embodiment 1.

Information which the base station 103 transmits to the mobile station 102 using the DSACCH 107 includes transmission rate grant (Rate Grant) RG for transmission as a permission rate for the above-mentioned transmission rate change request RR for transmission in addition to transmit-receive timing information (Map) and an amount of maximum permissible power increase or decrease (Max Power Margin) which is assigned to each mobile station 102, which are the same as those explained in embodiment 1.

The transmission rate change request RR for transmission is information indicating a request for permission to increase or decrease the data transmission rate. The transmission rate grant RG for transmission is information indicating permission to increase or decrease the data transmission rate which is provided in response to the transmission rate change request RR for transmission.

Next, data transmission-and-reception processing of the mobile station 102 and base station 103 in accordance with embodiment 2 will be explained.

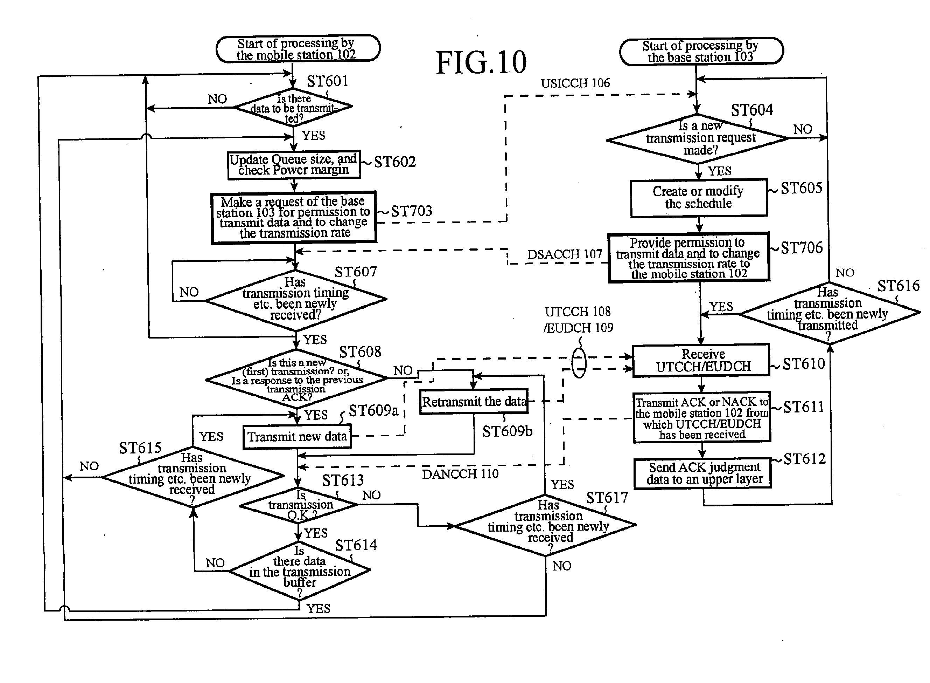

Fig. 10 is a flow chart of the packet data transmission-and-reception processing of the mobile station 102 and base station 103 in accordance with embodiment 2 of the present invention.

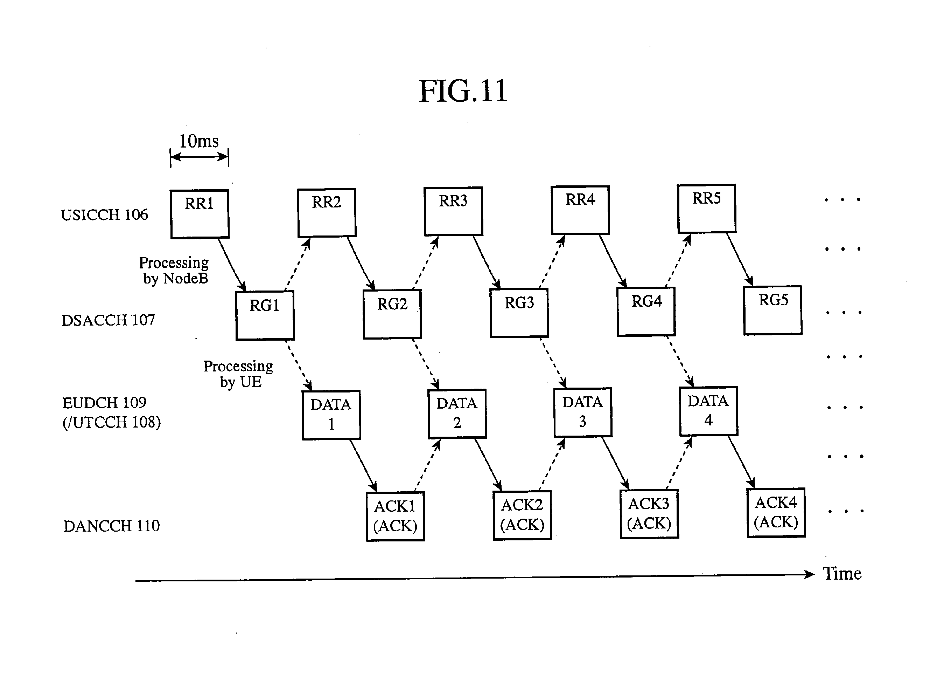

Fig. 11 is a timing chart of the packet data transmission-and-reception processing of the mobile station 102 and base station 103. In the figure, the vertical axis shows channels and the horizontal axis shows time. Arrows (solid lines) show processing carried out by the base station 103, and arrows (dashed lines) show processing carried out by the mobile station 102. RR1 to RR5 denote transmission rate change requests for transmission transmitted one by one using the USICCH 106 from the mobile station 102, RG1 to RG5 denote transmission rate grants for transmission which are transmitted by the base station 103 using the DSACCH 107 in response to the transmission rate change requests RR1 to RR5 for transmission, respectively, and DATA1 to DATA4 and ACK1 to ACK4 are the same as those shown in Fig. 6. Although the type-of-modulation information which the mobile station 102 transmits to the base station using the UTCCH 108 is not illustrated, it can be transmitted at the same time when DATA1 to DATA4 are transmitted or it can be partially transmitted in advance of DATA1 to DATA4. Furthermore, although only the transmission rate change requests RR1 to RR5 for transmission are illustrated as information transmitted using the USICCH 106, REQ1 to REQ5 are also transmitted as in the case of embodiment 1. Similarly, although only the transmission rate grants RG1 to RG5 for transmission are illustrated as information transmitted using the DSACCH 107, the plural pieces of scheduling assignment information ASS1 to ASS5 are also transmitted.

Hereafter, the process of transmitting and receiving packet data between the mobile station 102 and the base station 103 will be explained with reference to Figs. 8 to 11. In Fig. 10, the same processes as those shown in embodiment 1 are designated by the same reference numerals as shown in Fig. 5. Hereafter, step ST703 of the mobile station 102 and step ST706 of the base station 103, which processes different from the packet data transmission-and-reception processing of embodiment 1 will be explained in detail.

The mobile station 102, in step ST703, transmits a transmission rate change request RR1 for transmission to the base station 103 using the USICCH 106.

The transmission rate change request RR1 for transmission is generated by the multiplexing unit 407. When the size (i.e., Queue size) of data to be transmitted notified from the transmission data buffer 402 increases as compared with the size of data which was notified last time, the packet transmission control unit 403 notifies, as RR1, transmission rate increase request information to the multiplexing unit 407, whereas when the size of the data notified from the transmission data buffer 402 decreases as compared with the size of data which was notified last time, the packet transmission control unit 403 notifies, as RR1, transmission rate decrease request information to the multiplexing unit 407.

As a method of determining the transmission rate change request RR for transmission, there can be provided various methods other than the above-mentioned method. For example, the transmission rate change request RR for transmission can be determined based on an average of data size (Queue size) values which are summed over a long time.

The multiplexing unit 407 multiplexes the size (Queue size) of the data stored in transmission data buffer 402 and transmission rate change request RR1 for transmission which are notified from the packet transmission control unit 403, and the transmission power margin information (Power margin) furnished from the transmission power control unit 406, and outputs them, as a signal associated with the USICCH 106, to the transmitting unit 408.

The transmitting unit 408 converts the multiplexed signal associated with the UTCCH 106 which is furnished from the multiplexing unit 407 into a radio frequency signal using a known technique. The transmitting unit 408 also amplifies the radio frequency signal based on the transmission power control information (Power) furnished from the transmission power control unit 406 so that it has transmission power required for transmission using a known technique, and outputs the amplified radio frequency signal to the antenna 409. The antenna 409 then transmits it to the base station 103.

On the other hand, the base station 103, in step ST604, monitors whether it has received RR1 via the USICCH 106 from the mobile station 102.

When receiving the radio frequency signal associated with the USICCH 106 via the antenna 501, the base station 103 furnishes the received signal to the receiving unit 502, and the receiving unit converts it into a baseband signal. The receiving unit carries out the conversion of the received radio frequency signal to a baseband signal using a known technique.

The baseband signal is furnished to the demultiplexing unit 504, and is demultiplexed into signals associated with channels by the demultiplexing unit 504. The demultiplexing unit 504 extracts the size information about the data (Queue Size), transmission rate change request RR1 for transmission, and transmission power margin information (Power margin) from the signal associated with the USICCH 106, and furnishes them to the transmission scheduler 506.

Next, the base station 103, in step ST605, generates a transmission schedule.

The transmission scheduler 506 carries out scheduling for each mobile station 102 according to the size information about the data (Queue Size), transmission rate change request RR1 for transmission, transmission power margin information (Power margin), and other mobile station information which are furnished from the demultiplexing unit 504, from, for example, transmission rate change requests for transmission (RR) made by all mobile stations 102 staying in the cell, the priority of a communication service provided b the base station, the priority of each mobile station, and a calculation of the power of interference at the receive antenna of the base station 103 which occurs because of transmission at a transmission rate requested by each mobile station 102. As a scheduling method, there can be provided various methods including a method of giving priority to a mobile station 102 having a large volume of packet which has not been transmitted yet, a method of giving priority to a mobile station 102 having a transmission power margin, a method of assigning transmission timings to the plurality of mobile stations in the order that the base station has received transmission requests from them, a method of assigning transmission timings to the plurality of mobile stations in a predetermined order (Round-Robin), a method of giving priority to a mobile station 102 having little propagation loss or interference, i.e., having a good environmental communication condition (Max C/I), and a method (e.g., Proportional Fair) intermediate between the Round-Robin method and the Max C/I method, as in the case of embodiment 1. On the conditions that the throughput of the whole cell is the highest, the transmission scheduler selects a transmission rate at which the amount of data which can be transmitted at a time is maximized from a range of transmission rates which can be accepted by each mobile station 102, and determines scheduling assignment information indicating assignment of a schedule at the time when each mobile station 102 transmits packet data to the base station 103, and a transmission rate for transmission for the transmission rate change request RR1 for transmission so as to generates a transmission rate grant RG1 for transmission. Like the transmission rate change request RR for transmission, the transmission rate grant RG1 for transmission includes transmission rate increase request information, or transmission rate decrease request information when receiving a request for permission to decrease the transmission rate.

The transmission scheduler 506 furnishes the generated transmission rate grant RG1 for transmission and scheduling assignment information to the multiplexing unit 508.

The multiplexing unit 508 generates RG1 and the scheduling assignment information which are furnished thereto, as a signal associated with the DSACCH 107, and outputs them to the transmitting unit 503.

Next, in step ST706, RG1 and the scheduling assignment information are notified to the mobile station 102 via the antenna 501.

The mobile station 102, in step ST607, monitors whether it has received ASS1 using the DSACCH 107.

When receiving the radio frequency signal associated with the DSACCH 107 from the base station 103 via the antenna 409, the mobile station furnishes the radio frequency signal to the receiving unit 410. The receiving unit 410 converts the furnished radio frequency signal into a baseband signal using a known technique, and furnishes it to the demultiplexing unit 411. The demultiplexing unit 411 demultiplexes the baseband signal furnished thereto into signals associated with channels using a known technique. The demultiplexing unit 411 extracts the transmission rate grant RG1 for transmission and scheduling assignment information (Scheduling assignment) from the demultiplexed signal associated with the DSACCH 107, and furnishes them to the packet transmission control unit 403.

The packet transmission control unit 403 of the mobile station 102 determines the transmission rate such that it is equal to or less than the transmission rate specified by the transmission rate grant RG1 for transmission, and such that the amount of data which can be transmitted at a time is maximized, and controls the data transmission control unit 421, multiplexing unit 407, and transmission power control unit 406 to, in steps ST609a and ST609b, transmits the packet data to the base station 103.

The processing of the mobile station 102 and base station 103 in steps other than the above-mentioned steps is the same as that of embodiment 1.

As mentioned above, in accordance with embodiment 2, the mobile station 102 transmits a transmission rate change request for transmission of the next transmission data to the base station 103 before receiving a result of judgment of reception of transmission data from the base station 102 which is transmitted from the base station 103. As a result, the present embodiment offers an advantage of being able to shorten the time lapsed until the mobile station transmits the next transmission data to the base station 103, like above-mentioned embodiment 1. Furthermore, even if the reception judgment result for certain transmission data indicates NACK and the base station 103 desires retransmission of the transmission data, the mobile station can retransmit the data to the base station quickly and therefore the delay time imposed on the transmission of the data can be reduced.

In accordance with embodiment 2, the mobile station 102 transmits transmission request information as explained in embodiment 1, as well as a transmission rate change request for transmission, to the base station 103. As an alternative, the mobile station 102 can transmit only a transmission rate change request for transmission to the base station 103. The transmission rate change request RR for transmission is transmitted one by one according to each transmission of one DATA, as shown in Fig. 11. Therefore, even when only a transmission rate change request RR for transmission is transmitted to the base station 103, the fact that a transmission request for permission to transmit data is issued can be notified to the base station 103.

In addition, in accordance with embodiment 2, the base station 103 transmits scheduling assignment information as explained in embodiment 1, as well as a transmission rate grant for transmission, to the mobile station 102. As an alternative, the base station 103 can transmit only a transmission rate grant for transmission to the mobile station 102. Since the transmission rate grant RG for transmission is transmitted from the base station 103 while a one-to-one correspondence between the transmission rate grant and a transmission rate change request RR for transmission is established, assignment of a transmission timing can be notified to the mobile station 102 even when only the transmission rate grant RG for transmission is transmitted to the mobile station 102.

In addition, the intervals at which the transmission request is transmitted can be reduced (for example, 2ms) as compared with related art cases mentioned above. In this case, the amount of information of transmission rate change request RR for transmission and the amount of information of transmission rate grant RG for transmission for each transmission of data can be reduced. For this reason, since the whole transmission cycle, as well as the time required for transmission of those pieces of information, can be shortened, the delay time imposed on the first-time transmission of data and the delay time imposed on retransmission of data can be reduced.

### Embodiment 3.

Embodiment 3 is an example in which embodiment 1 or 2 is applied to a parallel retransmission system (N channel Stop and Wait: N (a natural number) is a division number) which is an on-demand type channel assignment system. Each channel used for data transmission and reception between the mobile station 102 and the base station 103 is time-divided periodically, and each divided channel is assigned to data to transmission and reception of data, and data retransmission processing is independently carried out in each assignment.

A range of concrete values of N and a concrete method of notifying N are defined by the 3GPP specifications. Assume that the division number N is determined based on exchanges of information among the base station control apparatus 104, base station 103, and mobile station 102 when channels are set up at a time of start of communications or when communications are being carried out. As an alternative, the base station 103 can independently determine the division number and notify it to the mobile station, or the base station 103 can determine the division number so that it falls within a range specified by the base station control apparatus 104. As an alternative, the base station control apparatus 104 can determine the division number in response to a request from the mobile station 102.

For example, in a case of using a method of notifying the division number N from the base station control apparatus 104 to the base station 103 and mobile station 102, a exchange of information between the base station control apparatus 104 and the base station 103 is called NBAP signaling in the 3GPP specifications, and is defined in the 3GPP specifications TS25.430 to TS25.435. A exchange of information between the base station control apparatus 104 and the mobile station 102 is called RRC signaling, and is defined by the specification TS25.331.

The mobile station 102 can notify the capacity of a storage device, such as a transmission data buffer 402, the maximum transmission rate, etc. to the base station control apparatus 104, and the base station control apparatus 104 can determine the division number N based on those values.

Although a notification of the control information mentioned above can be carried out using various channels defined by the released 1999th edition of the 3GPP specifications or various channels shown in either of embodiments 1 to 3, which channels are used are not limited. In the released 1999th edition, various channels are defined by the specification TS25.211.

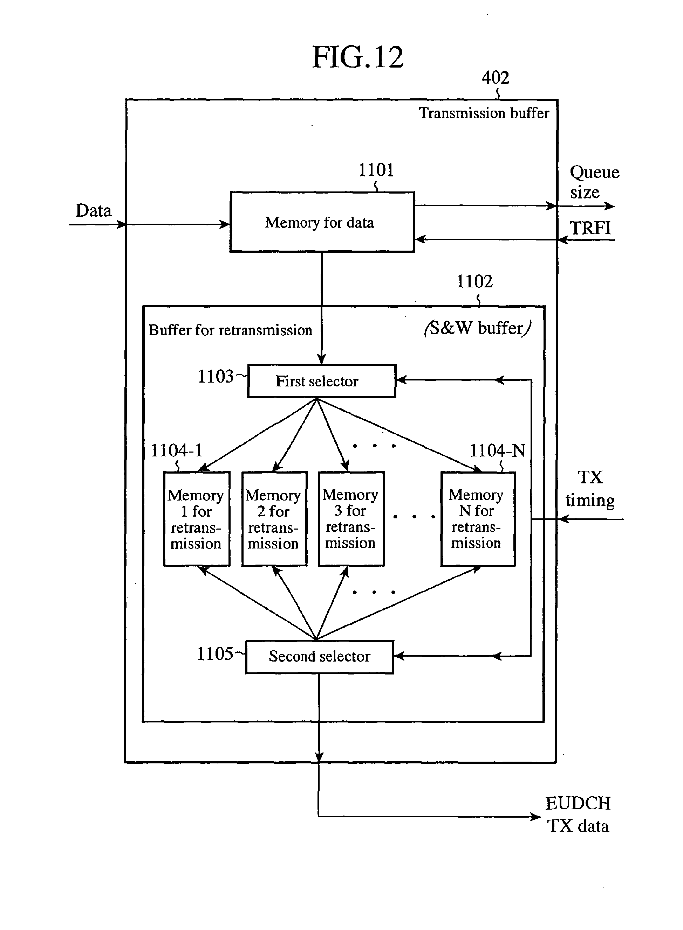

Fig. 12 is a block diagram showing the structure of the transmission data buffer 402 of the mobile station 102 in accordance with embodiment 3. As shown in the figure, the transmission data buffer 402 is provided with a memory 1101 for data, and a buffer 1102 for retransmission (e.g., Stop&Wait buffer). The buffer 1102 for retransmission is provided with a first selector 1103, memories 1104-1 to 1104-N for retransmission (N is a natural number), and a second selector 1105.

Next, data transmission and reception processing carried out by the mobile station 102 and base station 103 in accordance with embodiment 3 will be explained.

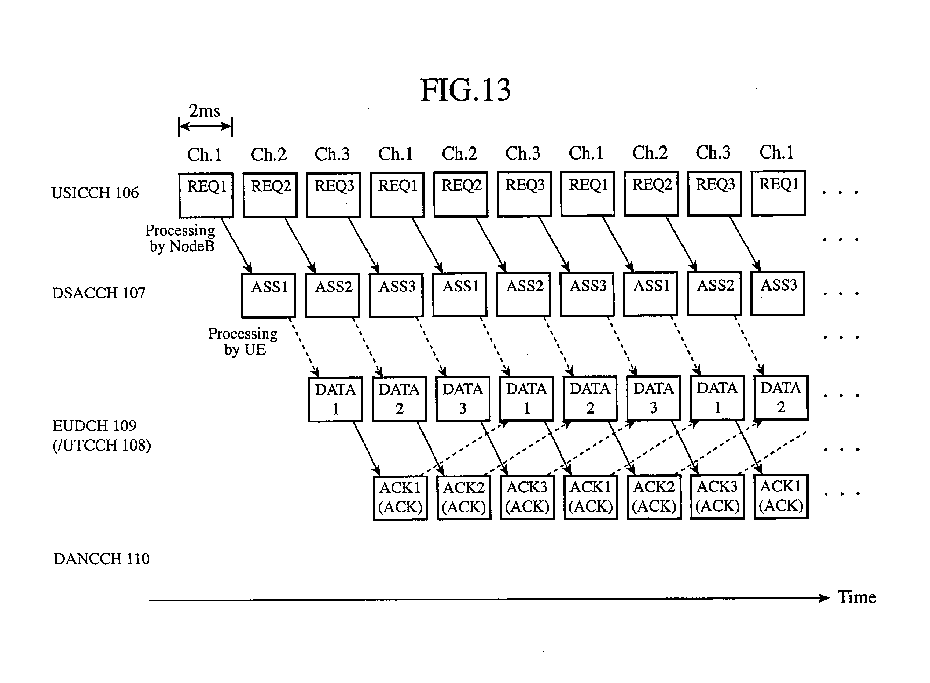

Fig. 13 is a timing chart of the packet data transmission and reception processing carried out by the mobile station 102 and base station 103. In the figure, the vertical axis shows channels and the horizontal axis shows time. Furthermore, arrows (solid lines) show processes carried out by the base station 103, and arrows (dashed lines) show processes carried out by the mobile station 102.

First, the principle behind the on-demand channel assignment system in the case of performing a parallel retransmission will be explained with reference to Fig. 13.

Ch.1 to Ch.3 show time-divided transmission frames of each channel. In this case, the time division N is set to 3, and the subframe time length is set to 2ms. Transmission and reception processing is performed on each data on a subframe-by-subframe basis. The division number N is determined so that transmission of the next transmission request REQ2 is started before the mobile station 102 completes receiving a reception judgment result ACK1 which the base station 103 has sent out in response to the transmission request REQ1 assigned to Ch.1.

In the figure, REQ1 to REQ3 denote transmission requests transmitted using Ch. 1 to Ch. 3 of USICCH 106, ASS1 to ASS3 denote pieces of scheduling assignment information transmitted using Ch.1 to Ch.3 of DSACCH 107, DATA1 to DATA3 denote packet data transmitted using Ch.1 to Ch.3 of EUDCH 109, and ACK1 to ACK3 denote pieces of reception judgment result information transmitted using Ch.1 to Ch.3 of DANCCH 110. Each REQ, each ASS, each DATA, and each ACK have the same information as REQ, ASS, DATA, and ACK in accordance with embodiment 1, respectively. Although type-of-modulation information which the mobile station 102 transmits to the base station using UTCCH 108 is not illustrated, it can be transmitted at the same time when DATA1 to DATA3 are transmitted or it can be partially transmitted in advance of DATA1 to DATA3.

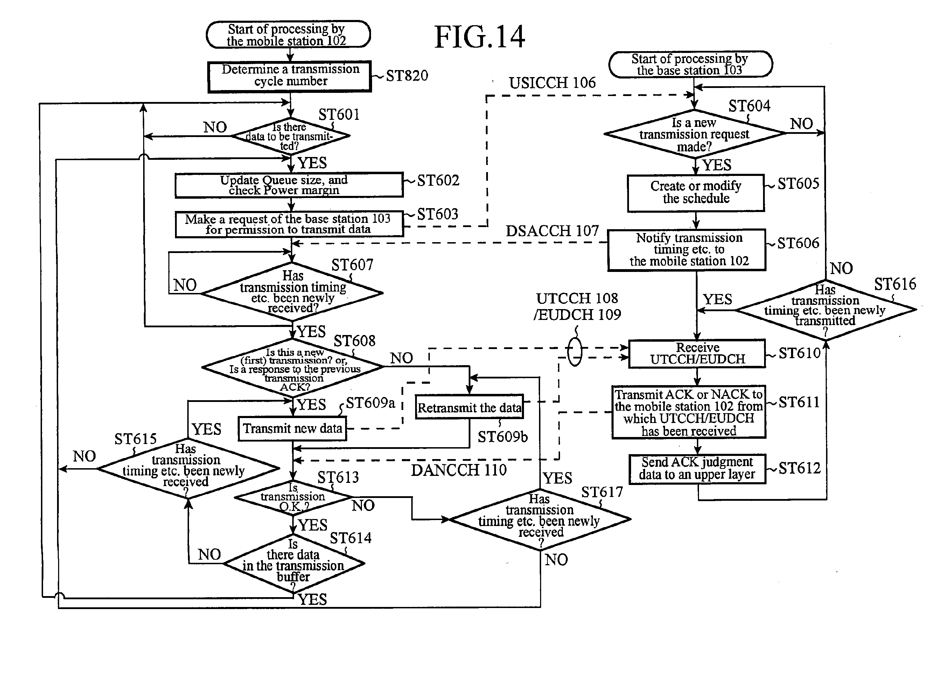

Fig. 14 is a flow chart of the packet data transmission and reception processing carried out by the mobile station 102 and base station 103 in accordance with embodiment 3.

In Fig. 14, the same reference numerals as shown in Fig. 5 denote steps of performing the same processes as those of embodiment 1. Transmission and reception processing in each of N time-divided transmission cycles is much the same as the transmission and reception processing of embodiment 1. The transmission and reception processing in each of N time-divided transmission cycles differs from the transmission and reception processing of embodiment 1 in determination of a cycle identification number (one of Ch.1 to Ch.3) in step ST820 of the mobile station 102, and processing carried out in the transmission data buffer 402.

Next, the operation of the transmission data buffer 402 in accordance with embodiment 3 will be explained.

When receiving packet data (Data) furnished thereto from an upper layer processing unit 401, the transmission data buffer 402 temporarily stores the packet data (Data) in the memory 1101 for data.

The memory 1101 for data updates the transmission data size (Queue size) held thereby based on the data size of the packet data (Data) furnished thereto, and outputs the transmission data size to a packet transmission control unit 403.

The memory 1101 for data then divides packet data (Data) held thereby based on transmission data size (Block size) information about one transmission, which is included in the type-of-modulation information (TRFI) furnished thereto, into plural pieces, and outputs them to the first selector 1103.

The first selector 1103 assigns the plurality of packet data furnished thereto from the memory 1101 for data to the memories 1104-1 to 1104-N for retransmission, respectively, based on transmission timing (TX timing) information furnished thereto from the packet transmission control unit 403, and outputs them.

The memories 1104-1 to 1104-N for retransmission store the plurality of packet data assigned thereto, respectively.

The second selector 1105 sequentially selects the memories 1104-1 to 1104-N for retransmission in which the plurality of time-divided packet data (Data) to be transmitted are respectively stored based on the transmission timing (TX timing) furnished thereto from the packet transmission control unit 403, and then outputs the selected time-divided data (EUDCH TX data) stored in the memories for retransmission to a multiplexing unit 407.

At the same time when the second selector 1105 operates in this way, the first selector 1103 also assigns one or more time-divided packet data furnished thereto from the memory 1101 for data to the memories 1104-1 to 1104-N for retransmission based on the transmission timing (TX timing) furnished thereto from the packet transmission control unit 403.

As shown in Fig. 13, the transmission request REQ1 is transmitted from the mobile station 102 to the base station 103, and the following transmission requests REQ2 and REQ3 are sequentially transmitted from the mobile station 102 to the base station 103. When receiving the transmission request REQ1, the base station 103 creates scheduling assignment information ASS1 using a transmission scheduler 506, and then notifies it to the mobile station 102. Similarly, the base station 103 creates scheduling assignment information ASS2 and ASS3 in response to REQ2 and REQ3, respectively, and then transmits each of them to the mobile station.

The mobile station 102 transmits DATA1 to the base station 103 according to ASS1 received thereby. Similarly, the mobile station transmits DATA2 and DATA3 to the base station according to ASS2 and ASS3, respectively.

After receiving DATA1, the base station 103 transmits a reception judgment result ACK1 to the mobile station 102. Similarly, after receiving DATA2 and DATA3, the base station transmits reception judgment results ACK2 and ACK3 to the mobile station, respectively.

For example, for the channel ch.1, the mobile station 102 starts transmission of the next data transmission request REQ1 associated with the same channel ch.1 to the base station 103 before receiving the reception judgment result ACK1 from the base station.

In an initial state, it is assumed that one packet data is stored in each of the memories 1104-1 to 1104-N for retransmission in units of data corresponding to a length of time-divided subframes.

As mentioned above, in accordance with embodiment 3, the mobile station transmits the next transmission request to the base station at the next transmission timing in the same cycle before completing receiving a reception judgment result which the base station has sent to the mobile station in response to data which was transmitted thereto at a certain time-divided transmission timing. In the parallel retransmission system, the data transmission intervals can be shortened. Thereby, even when a reception judgment result for certain data indicates NACK and there is a necessity to resend the data at the next assigned timing, the data can be resent to the base station quickly and therefore the delay time can be reduced.

Since the intervals at which the transmission request is transmitted is shortened compared with the cases explained in the related art, the amount of information of the transmission request REQ in each transmission and scheduling assignment information ASS can be reduced. For this reason, since the whole transmission cycle, as well as the time required for each transmission, can be shortened, the delay time which occurs in the first transmission and the delay time which occurs in retransmission of data can be reduced.

In accordance with embodiment 3, the memory 1101 for data and memories 1104-1 to 1104-N for retransmission are separately disposed. As an alternative, a memory can be used both as them. In this case, instead of N, a size of memory can be specified for each transmission cycle. A concrete size of memory and a concrete method of notifying the size of memory are defined by the 3GPP specifications. Assume that the size of memory is determined based on exchanges of information among the base station control apparatus 104, base station 103, and mobile station 102 when channels are set up at a time of start of communications or when communications are being carried out. For example, when notifying the size of memory from the base station control apparatus 104 to the base station 103 and mobile station 102, an exchange of information between the base station control apparatus 104 and the base station 103 is called NBAP signaling in the 3GPP specifications, and is defined in the 3GPP specifications TS25.430 to TS25.435. An exchange of information between the base station control apparatus 104 and the mobile station 102 is called RRC signaling, and is defined by the specification TS25.331.

As a method of determining the size of memory, there can be provided, for example, a method of notifying the capability (Capability disclosed in the specification TS25.306) of a storage device, such as the transmission buffer of the mobile station 102, to the base station control apparatus 104 at a time of start of communications (at a time of setup of channels etc.), and determining the size of memory by taking into consideration other capabilities (Capability) notified from the mobile station 102, for example, a maximum transmission rate, and QoS (Quality Of Service: a type of service, a minimum guaranteed transmission rate, etc.) by means of the base station control apparatus 104.

As shown in embodiment 2, a transmission rate change request RR for transmission can be transmitted instead of the transmission request REQ, and a transmission rate grant RG for transmission can be transmitted instead of the scheduling assignment information ASS. Also in this case, the same advantage can be provided.

Next, a first variant of embodiment 3 will be explained.

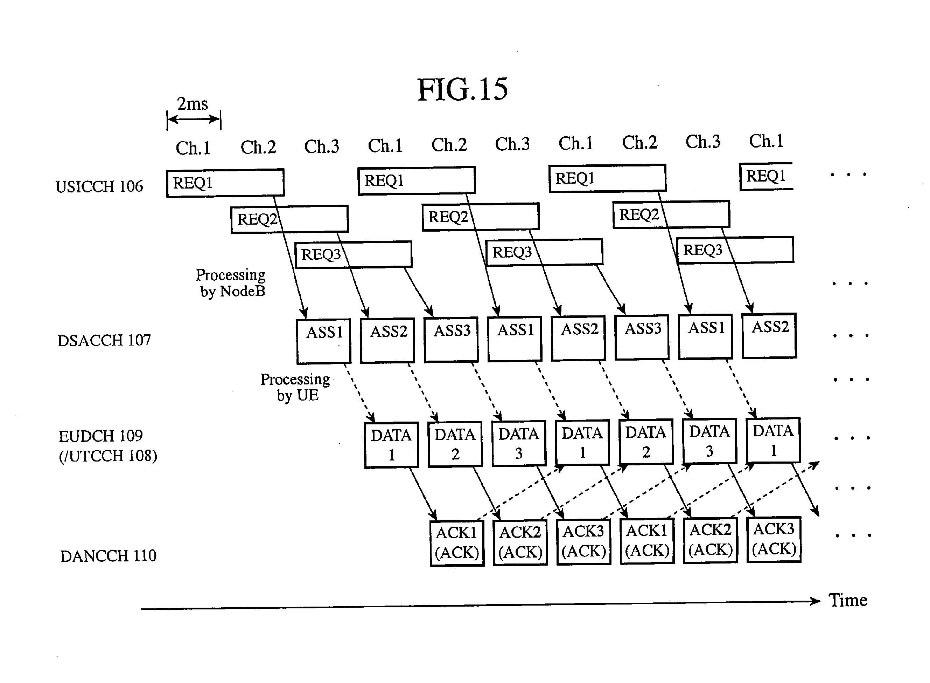

Fig. 15 is a timing chart of a data transmission and reception process of transmitting data between the mobile station and the base station in accordance with the first variant of embodiment 3. The first variant is also applied to the parallel retransmission system.

The data transmission and reception process of this variant differs from that shown in Fig. 13 in that the transmission requests REQ1 to REQ3 transmitted from the mobile station 102 are multiplexed according a code multiplexing method, and the time required to transmit each of the transmission requests REQ1 to REQ3 is longer than that shown in Fig. 13.

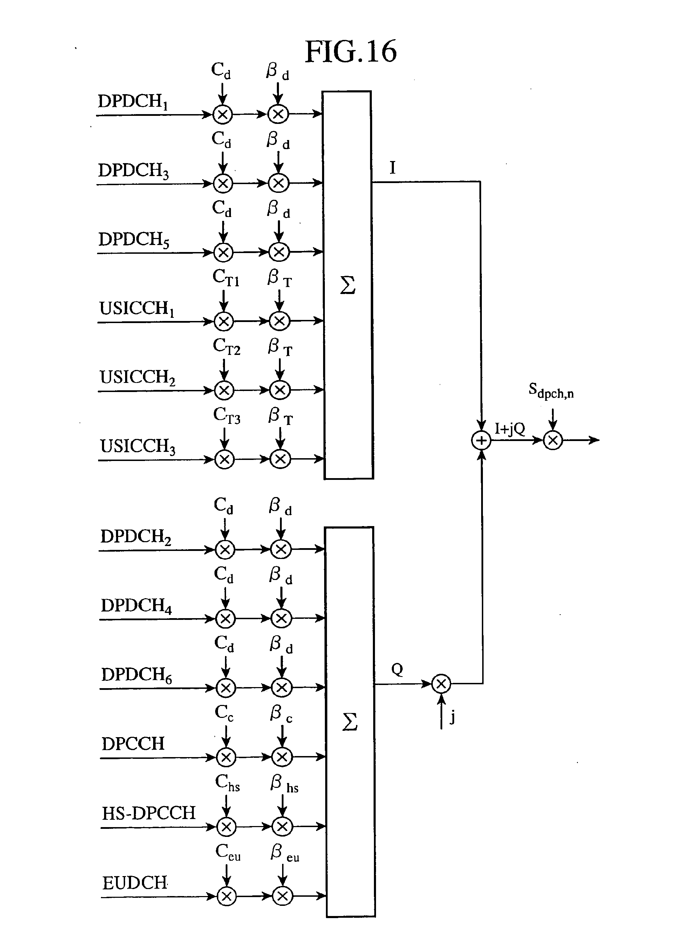

A series of transmission and reception processes are the same as those of above-mentioned embodiment shown in Fig. 14. A channel multiplexing method in accordance with the first variant is shown in Fig. 16. This method is the one of multiplexing various physical channels which are transmitted from the mobile station 102 to the base station 103 according to the conventional W-CDMA specifications (the released 1999th edition), and channels in accordance with the present invention.

This multiplexing processing is carried out by the multiplexing unit 407 of the mobile station 102.

In the figure, DPDCH₁ to DPDCH₆ (Dedicated Physical Channels) denote channels for data, USICCH₁ to USICCH₃ denote channels used for transmitting transmission requests REQ1 to REQ3, DPCCH (Dedicated Control Channel) and HS-DPCCH (High Speed-Dedicated Control Channel) denote channels for control, and EUDCH denotes a channel for packet data transmission. Furthermore, C_{d} denotes a spread code for DPDCH, C_{c} denotes a spread code for DPCCH, C_{T1} to C_{T3} denote spread codes for USICCH₁ to USICCH₃, respectively, Cₕₛ denotes a spread code for HS-DPCCH, and Cₑᵤ denotes a spread code for EUDCH. In addition, β_{d} denotes a signal amplitude coefficient for DPDCH, β_{c} denotes a signal amplitude coefficient for DPCCH, βₕₛ denotes a signal amplitude coefficient for HS-DPCCH, β_{T} denotes a signal amplitude coefficient for USICCH, βₑᵤ denotes a signal amplitude coefficient for EUDCH, and S_{dpch,n} denotes a scrambling code for mobile station identification. Channels other than channels shown in embodiment 1 are equivalent to channels which comply with conventional specifications. The format of each channel is defined by the specification TS25.211, and the multiplexing method is defined by the specification TS25.213.

As shown in the figure, signals associated with DPDCH₁, DPDCH₃, DPDCH₅, and USICCH₁ to USICCH₃ are multiplied by spread codes and amplitude coefficients for the channels, respectively, and are summed by an adder (Σ) for the I-axis of a complex number signal (I+j*Q) so that they can be assigned to the I-axis of the complex number signal.

On the other hand, signals associated with DPDCH₂, DPDCH₄, DPDCH₆, DPCCH, HS-DPCCH, and EUDCH are multiplied by spread codes and amplitude coefficients for the channels, respectively, and are summed by an adder (Σ) for the Q-axis of the complex number signal so that they can be assigned to the Q-axis of the complex number signal.

The signals associated with DPDCH₂, DPDCH₄, DPDCH₆, DPCCH, HS-DPCCH, and EUDCH which are summed are multiplied by an imaginary number (j), and is added with the summed result of the I-axis (i.e., they are IQ-multiplexed), and is handled as a complex number signal.

After the IQ-multiplexed complex number signal is multiplied by the scrambling code S_{dpch},ₙ for mobile station identification by the multiplier, the IQ-multiplexed complex number signal is outputted to a transmitting unit 408 and is transmitted to the base station 103 via an antenna 409. The scrambling code S_{dpch.n} for mobile station identification is a complex number signal.

In accordance with the first variant, all the channels are separated using different codes. As an alternative, both either time-multiplexing of the channels according to conventional specifications and the channels in accordance with the present invention, or time-multiplexing of the channels in accordance with the present invention, and spread codes can be used.

In addition, a part of the channels according to conventional specifications and the channels in accordance with the present invention can be made to serve a double purpose. For example, data transmission can be carried out using DPDCH which is a channel according to conventional specifications.

As mentioned above, by code-multiplexing the transmission requests REQ1 to REQ3 in each time-divided retransmission cycle using different spread codes, the data length of each of the transmission requests REQ1 to REQ3 can be made to become longer than that of above-mentioned embodiment 3.

Furthermore, since the transmission timing varies among transmission cycles, the peak of the transmission power concerning the whole transmission processing of the mobile station 102 can be reduced, the interference on the base station 103 and other mobile stations can be reduced, and therefore the throughput of the communications system can be improved.

In addition, since the number of division of a retransmission cycle in which each of the transmission requests REQ1 to REQ3 is sent to the base station 103 can be checked by the base station 103 using a spread code corresponding to one of the numbers Ch.1 to Ch.3 which is assigned to the retransmission cycle, the mobile station does not need to send the identification number of the transmission cycle to the base station separately, and therefore the number of transmitted bits can be reduced.

In this first variant, signals associated with USICCH₁ to USICCH₃ are multiplied by the same amplitude coefficient β_{T}. As an alternative, the amplitude coefficient β_{T} can be made to vary according to, for example, whether the signals associated with USICCH₁ to USICCH₃ will be transmitted for the first time or will be retransmitted.

As shown in embodiment 2, a transmission rate change request RR for transmission can be transmitted instead of the transmission request REQ, and a transmission rate grant RG for transmission can be transmitted instead of the scheduling assignment information ASS. Also in this case, the same advantage can be provided.

Next, a second variant of embodiment 3 will be explained.

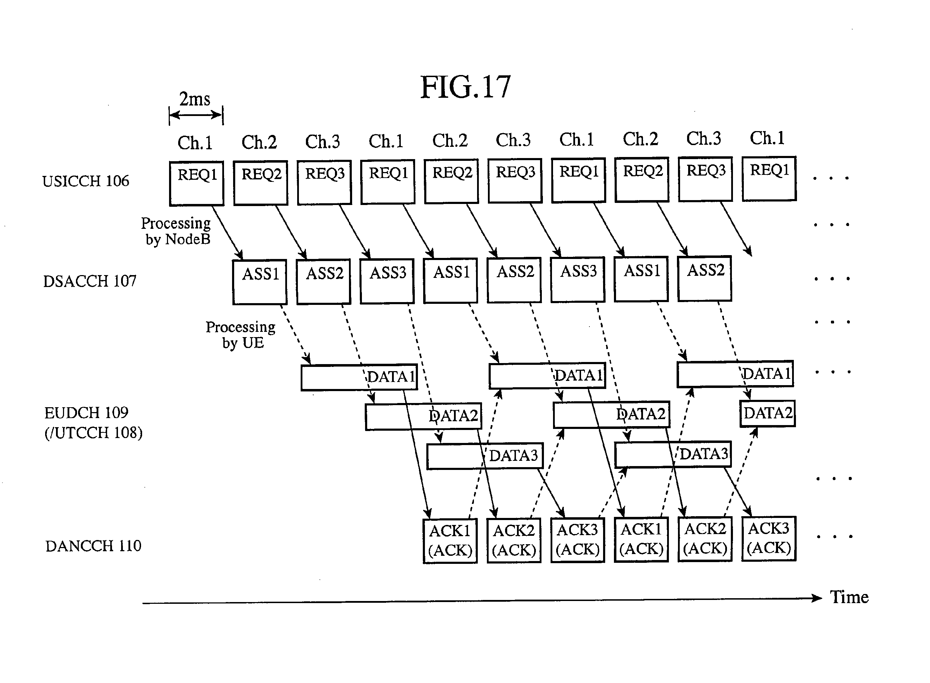

Fig. 17 is a timing chart of a data transmission and reception process of transmitting data between the mobile station and the base station in accordance with the second variant of embodiment 3. The second variant is also applied to the parallel retransmission system.

The data transmission and reception process of this variant differs from that shown in Figs. 13 and 15 in that the data DATA1 to DATA3 transmitted from the mobile station 102 are multiplexed according a code multiplexing method, and the time required to transmit each of the data DATA1 to DATA3 is longer than those shown in Figs. 13 and 15.

A series of transmission and reception processes are the same as those of above-mentioned embodiment shown in Fig. 14.

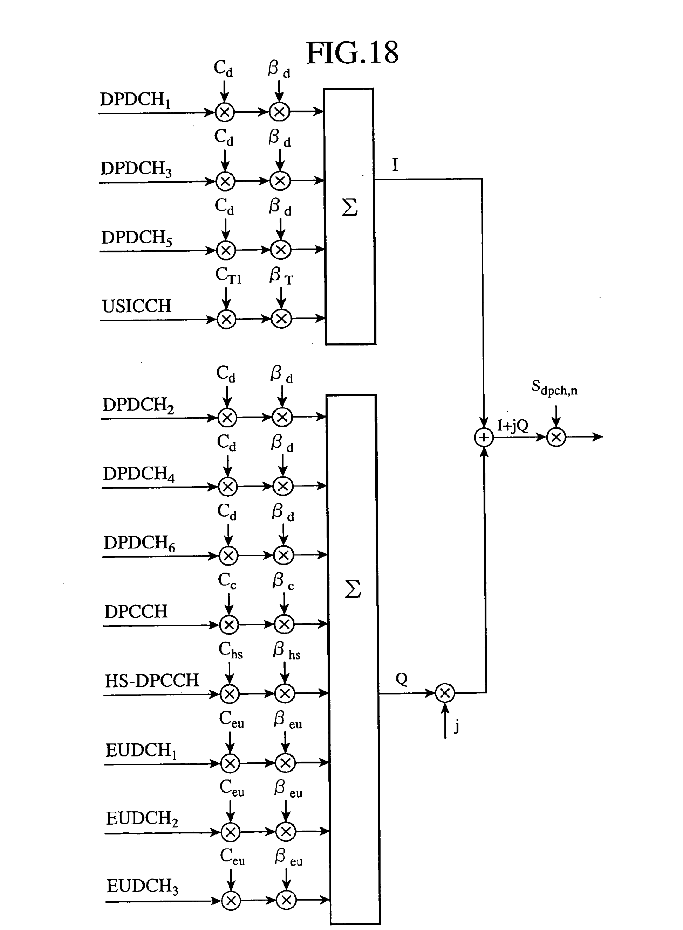

A channel multiplexing method in accordance with the second variant is shown in Fig. 18. This method is the one of multiplexing various physical channels which are transmitted from the mobile station 102 to the base station 103 according to the conventional W-CDMA specifications (the released 1999th edition), and channels in accordance with the present invention.

This multiplexing processing is carried out by the multiplexing unit 407 of the mobile station 102.

The second variant differs from the first variant shown in Fig. 16 in that the number of channels USICCH for transmission request is one, and three channels EUDCH₁ to EUDCH₃ are provided for packet data transmission.

Thus, by code-multiplexing each of the data DATA1 to DATA3 in each time-divided retransmission cycle using a different spread code, the time required to transmit each of the data DATA1 to DATA3 can be lengthened.

Furthermore, since the transmission timing varies among transmission cycles, the peak of the transmission power concerning the whole transmission processing of the mobile station 102 can be reduced, the interference on the base station 103 and other mobile stations can be reduced, and therefore the throughput of the communications system can be improved.

In addition, since the number of division of a retransmission cycle in which each of the data DATA1 to DATA3 is sent to the base station 103 can be checked by the base station 103 using a spread code corresponding to one of the numbers Ch.1 to Ch.3 which is assigned to the retransmission cycle, the mobile station does not need to send the identification number of the transmission cycle to the base station separately, and therefore the number of transmitted bits can be reduced.

In this second variant, signals associated with EUDCH₁ to EUDCH₃ are multiplied by the same amplitude coefficient βₑᵤ. As an alternative, the amplitude coefficient βₑᵤ can be made to vary according to, for example, whether the signals associated with EUDCH₁ to EUDCH₃ will be transmitted for the first time or will be retransmitted.

As shown in embodiment 2, a transmission rate change request RR for transmission can be transmitted instead of the transmission request REQ, and a transmission rate grant RG for transmission can be transmitted instead of the scheduling assignment information ASS. Also in this case, the same advantage can be provided.

In accordance with the second variant, all the channels are separated using different codes. As an alternative, both either time-multiplexing of the channels according to conventional specifications and the channels in accordance with the present invention, or time-multiplexing of the channels in accordance with the present invention, and spread codes can be used. In addition, a part of the channels according to conventional specifications and the channels in accordance with the present invention can be made to serve a double purpose. For example, data transmission can be carried out using DPDCH which is a channel according to conventional specifications.

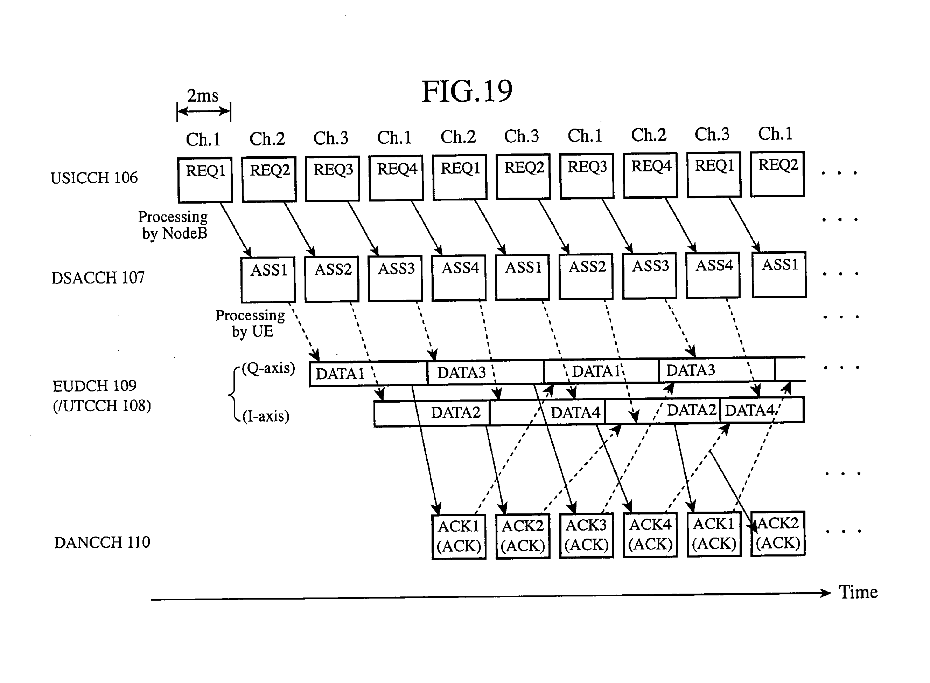

Next, a third variant of embodiment 3 will be explained. Fig. 19 is a timing chart of a data transmission and reception process of transmitting data between the mobile station and the base station in accordance with the third variant of embodiment 3. The third variant is also applied to the parallel retransmission system.

In accordance with the third variant, the time division number N is an even number (in this case, N = 4). A series of transmission and reception processes are the same as those of above-mentioned embodiment shown in Fig. 14.

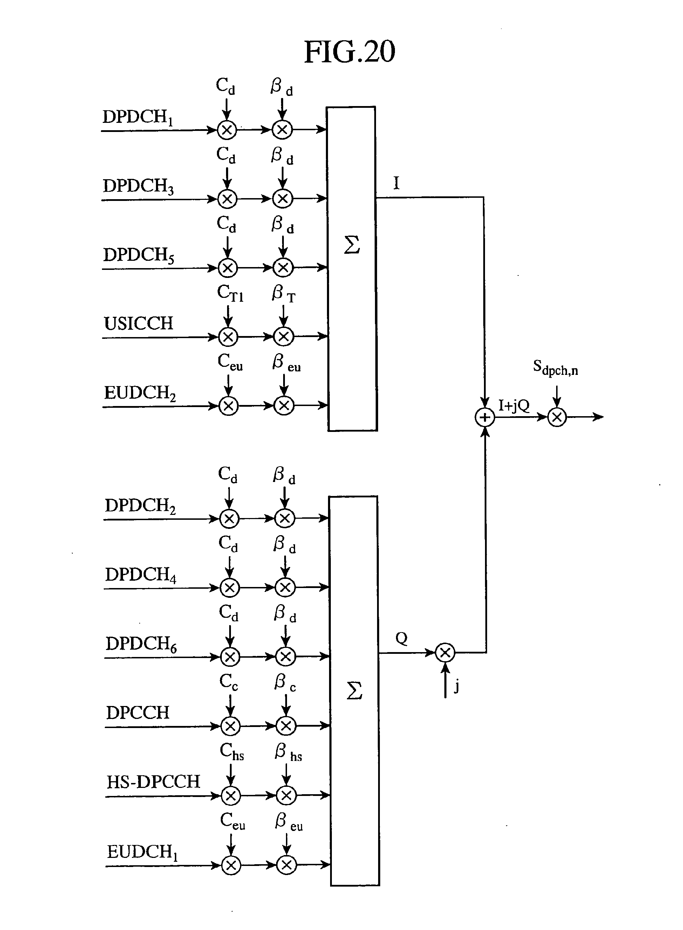

A channel multiplexing method in accordance with the third variant is shown in Fig. 20. This method is the one of multiplexing various physical channels which are transmitted from the mobile station 102 to the base station 103 according to the conventional W-CDMA specifications (the released 1999th edition), and channels in accordance with the present invention.

This multiplexing processing is carried out by the multiplexing unit 407 of the mobile station 102.

The data transmission and reception process of this variant differs from that shown in Fig. 16 in that the number of channels USICCH for transmission request is one, and the EUDCH₁ assigned to the Q-axis and the EUDCH₂ assigned to the I-axis are provided for packet data transmission.

The EUDCH₁ is assigned to the data DATA1 and DATA3, and the EUDCH₂ is assigned to the data DATA2 and DATA4.

Thus, by IQ-multiplexing the data DATA1 to DATA4 in each time-divided retransmission cycle with respect to different axes, the time required to transmit each of the data DATA1 to DATA4 can be lengthened. Furthermore, since the transmission timing varies among transmission cycles, the peak of the transmission power concerning the whole transmission processing of the mobile station 102 can be reduced, the interference on the base station 103 and other mobile stations can be reduced, and therefore the throughput of the communications system can be improved.

In accordance with the third variant, the data DAT A1 and DATA3 are time-multiplexed with respect to the Q-axis, and the data DATA2 and DATA4 are time-multiplexed with respect to the I-axis. They can be further code-multiplexed using different spread codes with respect to the axes, respectively.

In addition, the transmission requests REQ1 to REQ4 can be separately multiplexed with respect to the I-axis and the Q-axis, like the data DATA1 to DATA4.

As shown in embodiment 2, a transmission rate change request RR for transmission can be transmitted instead of the transmission request REQ, and a transmission rate grant RG for transmission can be transmitted instead of the scheduling assignment information ASS. Also in this case, the same advantage can be provided.

In accordance with the third variant, all the channels are separated using different codes. As an alternative, both either time-multiplexing of the channels according to conventional specifications and the channels in accordance with the present invention, or time-multiplexing of the channels in accordance with the present invention, and spread codes can be used. In addition, a part of the channels according to conventional specifications and the channels in accordance with the present invention can be made to serve a double purpose. For example, data transmission can be carried out using DPDCH which is a channel according to conventional specifications.

Next, a fourth variant of embodiment 3 will be explained.

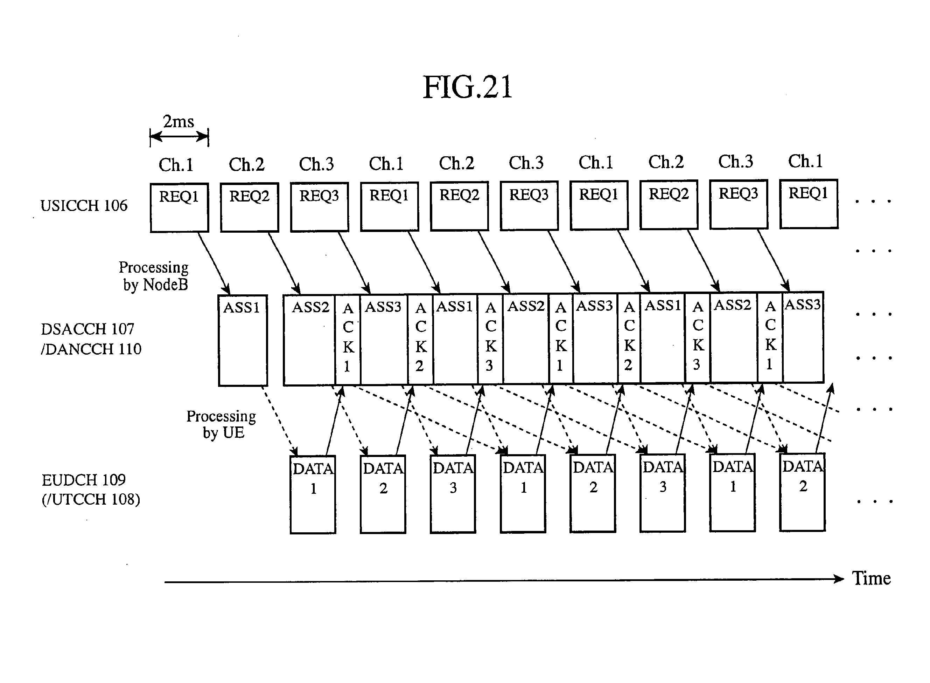

Fig. 21 is a timing chart of a data transmission and reception process of transmitting data between the mobile station and the base station in accordance with the fourth variant of embodiment 3. The third variant is also applied to the parallel retransmission system. A series of transmission and reception processes are the same as those of above-mentioned embodiment shown in Fig. 14.

The fourth variant differs from the first variant in that the plural pieces of scheduling assignment information ASS1 to ASS3 transmitted using DSACCH 107, and the reception judgment results ACK1 to ACK3 transmitted using DANCCH 110 are time-multiplexed. Thereby, the signals associated with both the channels can be transmitted using one spread code. This multiplexing processing is carried out by a multiplexing unit 508 of the base station 103.

In downlinks from the base station 103 to the mobile station 102, spread codes are used in order to divide transmissions from the base station 103 to mobile stations 102 among the mobile stations. There are cases where a large number of mobile stations 102 exist in the communication range (cell) of the base station 103, and therefore limit control of the communication rate is carried out based on the number of spread codes.

In accordance with the fourth variant, since DSACCH 107 and DANCCH 110 which are downlink channels are time-multiplexed, and are transmitted using the same spread code, increase in the number of used codes can be suppressed, and reduction in the channel capacity can be suppressed.

Even embodiment 1 or 2 can offer the same advantage by time-multiplexing DSACCH 107 and DANCCH 110 which are downlink channels, like the fourth variant of embodiment 3.

In accordance with embodiment 3, all the transmission timing of the time-divided N transmission cycles is assigned to one mobile station 102. As an alternative, by specifying, for example, a certain cycle for a group of two or more specific mobile stations 102 (how to construct the group can be changed), transmission data from the two or more of mobile stations 102 can be time-multiplexed.

In this case, a concrete assignment region and a concrete method of notifying the assignment region are defined by the 3GPP specifications. Assume that the assignment region is determined based on exchanges of information among the base station control apparatus 104, base station 103, and mobile station 102 when channels are set up at a time of start of communications or when communications are being carried out. For example, when notifying the assignment region from the base station control apparatus 104 to the base station 103 and mobile station 102, an exchange of information between the base station control apparatus 104 and the base station 103 is called NBAP signaling in the 3GPP specifications, and is defined in the 3GPP specifications TS25.430 to TS25.435. An exchange of information between the base station control apparatus 104 and the mobile station 102 is called RRC signaling, and is defined by the specification TS25.331.

As a method of determining the assignment, there can be provided, for example, a method of notifying the capability (Capability) of a storage device, such as the transmission buffer of the mobile station 102, to the base station control apparatus 104 at a time of start of communications (at a time of setup of channels etc.), and determining the assignment by taking into consideration other capabilities (Capability) notified from the mobile station 102, for example, a maximum transmission rate, by means of the base station control apparatus 104.

As an alternative, the base station 103 can independently determine the assignment and notify it to the mobile station, or the base station 103 can determine the assignment so that it falls within a range specified by the base station control apparatus 104. As an alternative, the base station control apparatus 104 can determine the assignment in response to a request from the mobile station 103.

Although a notification of the control information mentioned above can be carried out using various channels defined by the released 1999th edition of the 3GPP specifications or various channels shown in either of embodiments 1 to 3, which channels are used are not limited. In the released 1999th edition, various channels are defined by the specification TS25.211.

In above-mentioned embodiment 3, when packet data needs to be retransmitted from the mobile station 102, the scheduling assignment information ASS (retransmission) for retransmission is transmitted from the base station 103 to the mobile station 102, as in the case of embodiment 1. As an alternative, when the modulation method of modulating the packet data to be retransmitted is the same as that at the time of the first-time transmission of the packet data, or when it is predetermined that the packet data to be retransmitted is certainly retransmitted at the next transmission timing, it is acceptable not to transmit the scheduling assignment information ASS (retransmission) for retransmission. In this case, the interference on other mobile stations 102 and the base station 103 can be reduced, and therefore the total throughput of the communications system with respect to the base station 103 can be improved. Since the power consumption of the mobile station 102 can be reduced, the length of a call of the mobile station 102 can be increased.

### Industrial Applicability

As mentioned above, the mobile station in accordance with the present invention is suitable for shortening the delay time which occurs due to retransmission of packet data.

Furthermore, the base station in accordance with the present invention is suitable for shortening the delay time which occurs due to retransmission of packet data.

In addition, the communications system in accordance with the present invention is suitable for shortening the delay time which occurs due to retransmission of packet data.

## Claims

1. A mobile station which sends a transmission request for permission to transmit packet data to a base station and transmits said packet data to said base station according to transmission schedule information about a transmission schedule which said base station determines in response to said transmission request, **characterized in that** said mobile station comprises:
a transmitting unit for transmitting said transmission request for permission to transmit packet data to said base station, and for transmitting said packet data to said base station;
a receiving unit for receiving said transmission schedule information from said base station, and for receiving a result of judgment of reception of said packet data which is transmitted to said base station by said transmitting unit; and
a control unit for controlling said transmitting unit so that said transmitting unit transmits a transmission request for permission to transmit new packet data before said receiving unit completes the reception of said reception judgment result.

2. The mobile station according to Claim 1, **characterized in that** said mobile station includes a transmission data storage unit for temporarily storing packet data which is to be transmitted to the base station, a multiplexing unit for multiplexing the transmission request and the packet data which are to be transmitted to said base station, and for delivering them to the transmitting unit, and a demultiplexing unit for delivering the transmission schedule information and the reception judgment result which are furnished thereto from the receiving unit to the control unit, and **characterized in that** said control unit controls the transmission of the transmission request and the packet data to said base station based on an amount of packet data stored in said transmission data storage unit, and the transmission schedule information notified from said base station, and instructs said multiplexing unit to generate the transmission request for permission to transmit new packet data so as to transmit this transmission request to said base station before said receiving unit completes the reception of the reception judgment result indicating judgment of reception of the transmitted packet data from said base station.

3. The mobile station according to Claim 1, **characterized in that** when the result of judgment of reception of the transmitted packet data from said base station indicates that the reception has failed, the control unit controls the transmitting unit so as to cause it to transmit said packet data to said base station again, and to transmit the transmission request for permission to transmit new packet data to said base station again.

4. The mobile station according to Claim 2, **characterized in that** transmission and reception of data between the mobile station and the base station are carried out in units of each of N subframes into which each frame is time-divided, and the time division number N is set so that the transmitting unit transmits the transmission request for permission to transmit new packet data to be transmitted for the next time to said base station before the receiving unit completes the reception of the reception judgment result indicating judgment of reception of the transmitted packet data from said base station.

5. The mobile station according to Claim 4, **characterized in that** the multiplexing unit multiplexes the transmission request information which is to be transmitted to the base station using code multiplexing, and the generated transmission request has a length longer than frame lengths of other transmission data and received data.

6. The mobile station according to Claim 4, **characterized in that** the multiplexing unit multiplexes the packet data to be transmitted to the base station using code multiplexing, and the generated packet data has a length longer than frame lengths of other transmission data and received data.

7. The mobile station according to Claim 4, **characterized in that** the multiplexing unit generates a complex number signal by I/Q multiplexing the transmission request and the packet data which are to be transmitted to the base station, so as to time-multiplex them simultaneously.

8. The mobile station according to Claim 7, **characterized in that** the time division number N is an even number, and the multiplexing unit divides a channel via which either the transmission request or the packet data is to be transmitted to the base station into two parts and assigns them to an I-axis and a Q-axis of a complex number signal, respectively.

9. A base station which receives a transmission request for permission to transmit packet data from a mobile station, notifies transmission schedule information which said base station determines in response to said transmission request to said mobile station, and receives said packet data which is transmitted thereto by said mobile station according to said transmission schedule information, **characterized in that** said base station comprises:
a receiving unit for receiving said transmission request from said mobile station, and for receiving packet data which corresponds to said transmission request and which is transmitted by said mobile station;
a scheduling unit, responsive to a transmission request for permission to transmit new packet data which said receiving unit receives, for, when a result of judgment of reception of the packet data which is transmitted according to said transmission schedule information shows a failure of reception, assigning a transmission schedule to retransmission of said packet data which said receiving unit has failed to receive on a priority basis, and for creating information about said assigned transmission schedule; and
a transmitting unit for transmitting both the transmission schedule information created by said scheduling unit and said result of judgment of reception of the packet data to said mobile station.

10. The base station according to Claim 9, **characterized in that** said base station includes a multiplexing unit for multiplexing the transmission schedule information and the result of judgment of reception of the packet data which are to be transmitted to said mobile station into a signal based on information furnished from the scheduling unit, and for furnishing the signal to the transmitting unit, and a demultiplexing unit for furnishing the transmission request furnished from the receiving unit to said scheduling unit, for determining whether the packet data furnished from said receiving unit has been received correctly, and for furnishing the result of judgment of reception of the packet data to said scheduling unit, and **characterized in that** said scheduling unit instructs said multiplexing unit to create the transmission schedule information again for the packet data which said receiving unit has failed to receive when the result of judgment of reception of the packet data furnished from the said demultiplexing unit shows that the reception of the packet data has failed.

11. A communication system in which a mobile station sends a transmission request for permission to transmit packet data to a base station and transmits said packet data to said base station according to transmission schedule information about a transmission schedule which said base station determines in response to said transmission request, and said base station transmits a result of judgment of reception of packet data which it has received to said mobile station, **characterized in that** said mobile station transmits transmission request information about new packet data which it will transmit to said base station next before completing reception of a result of judgment of reception of packet data which said mobile station has transmitted to said base station from said base station.

12. The communications system according to Claim 11, **characterized in that** when the result of judgment of reception of the packet data which said mobile station has transmitted to said base station shows that the reception of the packet data has failed, the mobile station transmits said packet data to said base station again, and transmits the transmission request information about new packet data which it will transmit to said base station next to said base station again.

13. The communications system according to Claim 11, **characterized in that** transmission and reception of data between the mobile station and the base station are carried out in units of each of N subframes into which each frame is time-divided, and in said mobile station the time division number N is set so that the transmitting unit transmits the transmission request for permission to transmit new packet data to be transmitted for the next time to said base station before the receiving unit completes the reception of the reception judgment result indicating judgment of reception of the transmitted packet data from said base station.

14. The communications system according to Claim 13, **characterized in that** the transmission request information or the packet data transmitted from the mobile station to the base station is multiplexed using code multiplexing, and said base station identifies time-divided subframes with a spread code of either said transmission request information or said packet data.

15. A CDMA (Code Division Multiple Access) communications system in which a mobile station sends a transmission request for permission to transmit packet data to a base station and transmits said packet data to said base station according to transmission schedule information about a transmission schedule which said base station determines in response to said transmission request, **characterized in that**
said mobile station comprises: a transmitting unit for transmitting said transmission request for permission to transmit packet data to said base station, and for transmitting said packet data to said base station;
a receiving unit for receiving said transmission schedule information from said base station, and for receiving a result of judgment of reception of said packet data which is transmitted to said base station by said transmitting unit; and a control unit for controlling said transmitting unit so that said transmitting unit transmits a transmission request for permission to transmit new packet data before said receiving unit completes the reception of said reception judgment result,
and said base station comprises: a receiving unit for receiving said transmission request from said mobile station, and for receiving packet data which corresponds to said transmission request and which is transmitted by said mobile station;
a scheduling unit, responsive to a transmission request for permission to transmit new packet data which said receiving unit receives, for, when a result of judgment of reception of the packet data which is transmitted according to said transmission schedule information shows a failure of reception, assigning a transmission schedule to retransmission of said packet data which said receiving unit has failed to receive on a priority basis, and for creating information about said assigned transmission schedule; and
a transmitting unit for transmitting both the transmission schedule information created by said scheduling unit and said result of judgment of reception of the packet data to said mobile station.

16. A communications method for use in a CDMA (Code Division Multiple Access) terminal which sends a transmission request for permission to transmit packet data to a base station and transmits said packet data to said base station according to transmission schedule information about a transmission schedule which said base station determines in response to said transmission request, **characterized in that** said communications method comprises:
a step of transmitting a transmission request for permission to transmit next packet data to said base station before receiving a result of judgment of reception of packet data which is transmitted to said base station last time from said base station;
a step of receiving transmission schedule information which corresponds to said transmission request from said base station; and
a step of transmitting the next packet data to said base station according to said transmission schedule information.

17. A communications method for use in a CDMA (Code Division Multiple Access) base station which receives a transmission request for permission to transmit packet data from a terminal, notifies transmission schedule information which said base station determines in response to said transmission request to said terminal, and receives said packet data which is transmitted thereto by said terminal according to said transmission schedule information, **characterized in that** said communications method comprises:
a step of receiving said packet data from said terminal;
a step of receiving said transmission request from said terminal;
a step of, when a result of judgment of reception of said packet data shows a failure of reception, assigning a transmission schedule to retransmission of said packet data which said receiving step has failed to receive by making the retransmission a higher priority than a request for permission to transmit next packet data; and
a step of transmitting the transmission schedule information which corresponds to the retransmission of said packet data to said terminal.
